(19) Europäisches Patentamt
European Patent Office
Office européen des brevets

(11) EP 2 770 022 B1

(12) **EUROPEAN PATENT SPECIFICATION**

(45) Date of publication and mention of the grant of the patent:
**26.07.2017 Bulletin 2017/30**

(21) Application number: **12841494.3**

(22) Date of filing: **19.10.2012**

(51) Int Cl.:
*C08L 21/00* (2006.01) *B60C 1/00* (2006.01)
*C08J 3/20* (2006.01) *C08K 3/00* (2006.01)
*C08K 5/09* (2006.01) *C08K 5/31* (2006.01)
*C08K 5/36* (2006.01) *C08K 5/37* (2006.01)
*C08K 5/405* (2006.01) *C08K 5/49* (2006.01)
*C08K 5/54* (2006.01) *C08K 3/36* (2006.01)
*C08K 13/02* (2006.01) *C08L 7/00* (2006.01)
*C08L 9/06* (2006.01) *C08K 5/38* (2006.01)

(86) International application number:
**PCT/JP2012/077167**

(87) International publication number:
**WO 2013/058390 (25.04.2013 Gazette 2013/17)**

(54) **RUBBER COMPOSITION AND MANUFACTURING METHOD FOR SAME**

KAUTSCHUKZUSAMMENSETZUNG UND HERSTELLUNGSVERFAHREN DAFÜR

COMPOSITION DE CAOUTCHOUC ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**21.10.2011 JP 2011232265**
**21.10.2011 JP 2011232267**
**11.11.2011 JP 2011247935**
**22.11.2011 JP 2011254761**
**21.12.2011 JP 2011280565**
**16.01.2012 JP 2012006228**

(43) Date of publication of application:
**27.08.2014 Bulletin 2014/35**

(73) Proprietor: **Bridgestone Corporation**
**Tokyo 104-8340 (JP)**

(72) Inventors:
- **HORIE, Satoshi**
**Tokyo 1878531 (JP)**
- **TODA, Takumi**
**Tokyo 1878531 (JP)**
- **YUKIMURA, Noriaki**
**Tokyo 1878531 (JP)**

(74) Representative: **Oxley, Robin John George et al**
**Marks & Clerk LLP**
**90 Long Acre**
**London WC2E 9RA (GB)**

(56) References cited:
**WO-A1-2009/066658 WO-A1-2009/066658**
**WO-A1-2010/000299 WO-A1-2010/000299**
**WO-A1-2011/062099 WO-A2-2011/068846**
**JP-A- S 633 042 JP-A- S 633 042**
**JP-A- S6 395 240 JP-A- H02 211 162**
**JP-A- 2009 019 098 JP-A- 2009 019 098**
**JP-A- 2011 132 373 JP-A- 2012 224 685**
**US-A- 3 763 089 US-A- 3 763 089**
**US-A1- 2002 143 084 US-A1- 2002 143 084**
**US-A1- 2002 143 095 US-A1- 2002 143 095**
**US-A1- 2002 147 257 US-A1- 2002 147 257**
**US-A1- 2002 174 924 US-A1- 2002 174 924**
**US-A1- 2003 135 006 US-A1- 2003 135 006**

- **GHATGE N D ET AL: "Development of new accelerator systems in efficient vulcanization", RUBBER WORLD, LIPPINCOTT & PETO, AKRON, OH, US, vol. 160, no. 6, 1 January 1969 (1969-01-01), pages 76-81, XP008172855, ISSN: 0035-9572**
- **RUBBER WORLD vol. 160, no. 6, 1969, pages 76 - 81, XP008172855**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a rubber composition capable of having an improved low-heat-generation property, and to a method for producing the rubber composition.

[Background Art]

Recently, in association with the movement of global regulation of carbon dioxide emission associated with the increase in attraction to environmental concerns, the demand for low fuel consumption by automobiles is increasing. To satisfy the requirement, it is desired to reduce the rolling resistance of tires, and further, it is desired to reduce the rolling resistance not lowering the high braking performance thereof on wet road surfaces.

As a technique of satisfying both rolling resistance reduction (low-heat-generation property) and high braking performance on wet road surfaces (wet braking performance), it is effective to use, as a filler, an inorganic filler such as silica or the like.

PTL 1 proposes a possibility of providing a rubber composition excellent in low rolling resistance (low-heat-generation property), wet braking performance, abrasion resistance, workability and the like without causing rubber burning, by using a small amount of a silane coupling agent in combination with a nonionic surfactant.

PTL 2 discloses a method of using a polymer that has an increased affinity to an inorganic filler such as silica or the like and to carbon black.

PTL 3 proposes using an organosilanes disulfide having a relatively high purity as a silane coupling agent in a rubber-silica premixing step and also using therein, as a silica-silane reaction activator, at least one sulfur donor of (1) elementary sulfur and (2) a sulfur-containing polysulfide-type organic compound having the property of releasing at least a part of sulfur at about 140°C to about 190°C. Further, approaches have been made to reducing a volatile alcoholic component such as ethanol or the like by substituting a part of the alkoxy group in a silane coupling agent with an alkyl group (see PTL 4 to 7). In PTL 8 and 9, it is written that the heat generation property of a rubber composition can be lowered by increasing the affinity between the filler such as carbon black or the like and the rubber component therein. The publications disclose that tires having a low hysteresis loss can be therefore obtained.

However, it is desired to further enhance the low-heat-generation property.

[Prior Art Documents]

[Patent Documents]

PTL 1: JP-A H11-130908
PTL 2: JP-A 2003-514079
PTL 3: JP-A H8-259739
PTL 4: JP-A 2002-275311
PTL 5: JP-A 2004-525230
PTL 6: WO2004/000930
PTL 7: JP-A 2006-169538
PTL 8: JP-A 2003-514079
PTL 9: WO2007/066689

JPS63 3042, US3763089, Ghatge N D et al., Rubber World, vol. 160, no. 6, 1 January 1969, WO2009/066658, US2003/145006, WO2010/000299, JP 2009 019098, US2002/143095, US2002/147257, US2002/174924 and US2002/143084 disclose rubber compositions.

[Summary of the Invention]

[Problems to be solved by the Invention]

The present invention is intended to provide a rubber composition capable of improving the low-heat-generation property of rubber products such as tires, etc., and to provide a production method for the rubber composition.

[Means for Solving the Problems]

For solving the above-mentioned problems, the present inventors have made various experimental analyses and, as a result, have found that the dispersibility of filler can be further improved by using a specific compound, and have completed the present invention.

Specifically, the present invention includes the following:

[1] A rubber composition, which contains a rubber component (A), at least one organic sulfur compound (B) selected from a hydroxy group-having thiourea derivative (B-1) represented by the following general formula (I) and a thioamide compound (B-2) represented by the following general formula (II), and a filler containing an inorganic filler (C):

[Chem. 1]

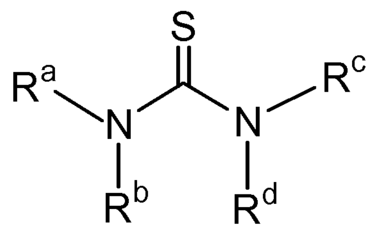

··· (I)

[wherein $R^a$, $R^b$, $R^c$ and $R^d$ may be the same or different, each representing a functional group selected from an alkyl group, an alkyl group having a hydroxy group, an alkenyl group, an alkenyl group having a hydroxy group, an aryl group and an aryl group having a hydroxy group, or a hydrogen atom, and at least one of $R^a$, $R^b$, $R^c$ and $R^d$ is a functional group selected from an alkyl group having a hydroxy group, an alkenyl group having a hydroxy group and an aryl group having a hydroxy group.],

[Chem. 2]

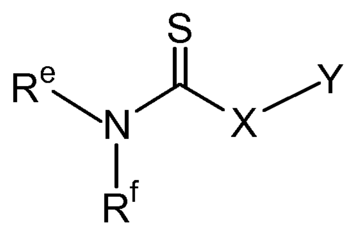

··· (II)

[wherein $R^e$ and $R^f$ each independently represent any of a hydrogen atom, an aliphatic hydrocarbon group having from 1 to 10 carbon atoms, and an aromatic hydrocarbon group having from 6 to 20 carbon atoms; X represents any of a single bond, an aliphatic hydrocarbon group having from 1 to 10 carbon atoms, and an aromatic hydrocarbon group having from 6 to 20 carbon atoms; Y represents at least one selected from a hydrogen atom, an alkyl group having from 1 to 5 carbon atoms, a hydroxy group, an amino group and a halogen atom; and at least one of $R^e$ and $R^f$ may bond to X];

[2] The rubber composition according to the above [1], wherein the organic sulfur compound (B) is a hydroxy group-having thiourea derivative (B-1) represented by the general formula (I) ;

[3] The rubber composition according to the above [1], wherein the organic sulfur compound(B) is a thioamide compound (B-2) represented by the general formula (II), and the composition further contains a silane coupling agent (D);

[4] A method for producing a rubber composition that contains a rubber component (A), a hydroxy group-having thiourea derivative (B-1) represented by the general formula (I), and a filler containing an inorganic filler (C); the method including at least a first kneading stage of kneading the rubber component (A), the hydroxy group-having thiourea derivative (B-1), and all or a part of the inorganic filler (C), and, after the first kneading stage, a final kneading stage of adding thereto a vulcanizing agent and further kneading them;

[5] A method for producing a rubber composition that contains a rubber component (A), a thioamide compound (B-2) represented by the general formula (II), a filler containing an inorganic filler (C), and a silane coupling agent (D) ; wherein the rubber composition is kneaded in plural stages, and in the first kneading stage, the rubber component

(A), all or a part of the inorganic filler (C), all or a part of the silane coupling agent (D), and the thioamide compound (B-2) represented by the general formula (II) are kneaded;

[Effects of the Invention]

According to the present invention, there are provided a rubber composition capable of improving the low-heat-generation property of tires, and a method for producing the rubber composition.

[Modes for Carrying Out the Invention]

The present invention is described in detail hereinunder.

[Rubber Composition]

The rubber composition of the the present invention is a rubber composition that contains a rubber component (A), at least one organic sulfur compound (B) selected from a hydroxy group-having thiourea derivative (B-1) represented by the following general formula (I) and a thioamide compound (B-2) represented by the following general formula (II), and a filler containing an inorganic filler (C).

[Chem. 5]

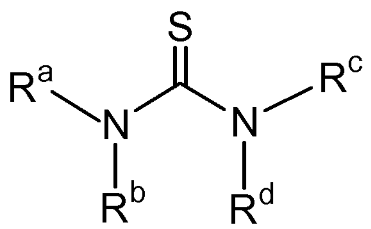

··· (I)

In the formula, $R^a$, $R^b$, $R^c$ and $R^d$ may be the same or different, each representing a functional group selected from an alkyl group, an alkyl group having a hydroxy group, an alkenyl group, an alkenyl group having a hydroxy group, an aryl group and an aryl group having a hydroxy group, or a hydrogen atom, and at least one of $R^a$, $R^b$, $R^c$ and $R^d$ is a functional group selected from an alkyl group having a hydroxy group, an alkenyl group having a hydroxy group and an aryl group having a hydroxy group.

[Chem. 6]

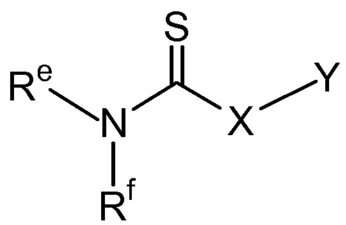

··· (II)

In the formula, $R^e$ and $R^f$ each independently represent any of a hydrogen atom, an aliphatic hydrocarbon group having from 1 to 10 carbon atoms, and an aromatic hydrocarbon group having from 6 to 20 carbon atoms; X represents any of a single bond, an aliphatic hydrocarbon group having from 1 to 10 carbon atoms, and an aromatic hydrocarbon group having from 6 to 20 carbon atoms; Y represents at least one selected from a hydrogen atom, an alkyl group having from 1 to 5 carbon atoms, a hydroxy group, an amino group and a halogen atom; and at least one of $R^e$ and $R^f$ may bond to X.

In the rubber composition of the first embodiment of the present invention mentioned above, the organic sulfur compound (B) is a hydroxy group-having thiourea derivative (B-1) represented by the above-mentioned general formula (I).

In the general formula (I), the carbon number of the alkyl group and that of the hydroxy group-having alkyl group in $R^a$, $R^b$, $R^c$ and $R^d$ each are preferably from 1 to 20, more preferably from 1 to 10.

The carbon number of the alkenyl group and that of the hydroxy group-having alkenyl group in $R^a$, $R^b$, $R^c$ and $R^d$ each are preferably from 2 to 20, more preferably from 2 to 10. The alkenyl group is especially preferably an allyl group.

The carbon number of the aryl group and that of the hydroxy group-having aryl group in $R^a$, $R^b$, $R^c$ and $R^d$ each are preferably from 6 to 20, more preferably from 6 to 16. The aryl group is especially preferably a phenyl group, a benzyl group, a phenethyl group or an alkyl group-substituted phenyl group (in which, for example, the alkyl group has from 1 to 6 carbon atoms).

Incorporating the hydroxy group-having thiourea derivative (B-1) represented by the general formula (I) {hereinafter this may be abbreviated as "hydroxy group-having thiourea derivative (B-1)"} in the rubber composition of the present invention significantly improves the dispersibility of filler and therefore significantly improves the low-heat-generation property of the rubber composition.

Preferably, the rubber composition of the first embodiment of the present invention further contains a silane coupling agent (D).

Preferably, in the rubber composition of the second embodiment of the present invention, the organic sulfur compound (B) is a thioamide compound (B-2) represented by the general formula (II) {hereinafter this may be abbreviated as "thioamide compound (B-2)"}, and also preferably, the rubber composition further contains a silane coupling agent (D). Accordingly, there can be obtained a rubber composition capable of improving the low-heat-generation property of tires, not worsening the abrasion resistance of tires.

[Rubber Component (A)]

The rubber component (A) for use in the rubber composition of the present invention is preferably a rubber component comprising at least one selected from natural rubber and synthetic dienic rubber. As the synthetic dienic rubber, usable here are styrene-butadiene copolymer rubber (SBR), polybutadiene rubber (BR), polyisoprene rubber (IR), butyl rubber (IIR), ethylene-propylene-diene tercopolymer rubber (EPDM), etc. One alone or two or more different types of natural rubber and synthetic dienic rubber may be used here either singly or as blended.

[Hydroxy Group-Having Thiourea Derivative (B-1)]

In the hydroxy group-having thiourea derivative (B-1) represented by the general formula (I) in the present invention, preferably, $R^a$ is a substituent selected from an allyl group, an alkyl group-substituted allyl group (in which the carbon number of the alkyl group is preferably from 1 to 10, more preferably from 1 to 6), and an allyl group-having alkenyl group, $R^b$ is a hydrogen atom, $R^c$ is a substituent selected from a hydroxy group-having alkyl group, a hydroxy group-having alkenyl group and a hydroxy group-having aryl group, and $R^d$ is a hydrogen atom.

The case where $R^a$ is a substituent selected from an allyl group, an alkyl group-substituted allyl group and an allyl group-having alkenyl group is preferred owing to the electron-donating effect, the case where $R^b$ is a hydrogen atom is preferred owing to the reduction in steric hindrance; the case where $R^c$ is a substituent selected from a hydroxy group-having alkyl group, a hydroxy group-having alkenyl group and a hydroxy group-having aryl group is preferred owing to the improvement of the interaction with the inorganic filler (C) to be mentioned below, especially silica; and the case where $R^d$ is a hydrogen atom is preferred owing to the reduction in steric hindrance.

As specific examples of the hydroxy group-having thiourea derivative (B-1), preferably mentioned are 1-allyl-3-(2-hydroxyethyl)-2-thiourea, 2-hydroxyethyl-thiourea, 3-hydroxypropyl-thiourea, etc.

Preferably, the hydroxy group-having thiourea derivative (B-1) to be contained in the rubber composition of the first embodiment of the present invention is incorporated in the composition in an amount of from 0.1 to 5 parts by mass per 100 parts by mass of the rubber component (A) therein. The amount of 0.1 parts by mass or more can exhibit a sufficient effect of improving the dispersibility of filler, and the amount of 5 parts by mass or less does not have any significant influence on the vulcanization speed. More preferably, the amount of the hydroxy group-having thiourea derivative (B-1) is from 0.2 to 3 parts by mass per 100 parts by mass of the rubber component (A).

[Thioamide Compound (B-2)]

The thioamide compound (B-2) is represented by the general formula (II). Incorporating the thioamide compound (B-2) represented by the general formula (II) in the composition improves the dispersibility of the filler including the inorganic filler (C) in the rubber composition of the present invention.

In the general formula (II), $R^e$ and $R^f$ each independently represent any of a hydrogen atom, an aliphatic hydrocarbon group having from 1 to 10 carbon atoms, and an aromatic hydrocarbon group having from 6 to 20 carbon atoms.

The aliphatic hydrocarbon group having from 1 to 10 carbon atoms for $R^e$ and $R^f$ includes, for example, a methyl group, an ethyl group, a propyl group, a butyl group, a pentyl group, a hexyl group, etc., which may be branched. The

aromatic hydrocarbon group having from 6 to 20 carbon atoms for $R^e$ and $R^f$ includes, for example, a phenyl group, a diphenyl group, etc. As $R^e$ and $R^f$, especially preferred are a case where both $R^e$ and $R^f$ are hydrogen atoms; a case where one of $R^e$ and $R^f$ is a hydrogen atom and the other is a methyl group; a case where one of $R^e$ and $R^f$ is a hydrogen atom and the other is a phenyl group; and a case where one of $R^e$ and $R^f$ is a hydrogen atom or an aliphatic hydrocarbon group and the aliphatic hydrocarbon group bonds to X to form a cyclic polymethylene group structure.

X represents any of a single bond, an aliphatic hydrocarbon group having from 1 to 10 carbon atoms, and an aromatic hydrocarbon group having from 6 to 20 carbon atoms; and Y represents at least one selected from a hydrogen atom, an alkyl group having from 1 to 5 carbon atoms, a hydroxy group, an amino group and a halogen atom.

The case where X is a single bond provides a structure in which X is absent and Y bonds to the carbon atom bonding to the sulfur atom, directly via a single bond and not via X. The aliphatic hydrocarbon group having from 1 to 10 carbon atoms for X includes a methyl group, an ethyl group, a propyl group, a butyl group, a pentyl group, a hexyl group, etc., which may be branched. The aromatic hydrocarbon group having from 6 to 20 carbon atoms for X includes a phenyl group, a diphenyl group, etc.

Y represents at least one selected from a hydrogen atom, an alkyl group having from 1 to 5 carbon atoms, a hydroxy group, an amino group and a halogen atom. In the case where X is an aliphatic hydrocarbon group having from 1 to 10 carbon atoms or an aromatic hydrocarbon group having from 6 to 20 carbon atoms, Y bonds to the hydrocarbon group. As described above, in the case where X is a single bond, Y provides a structure directly bonding to the carbon atom that bonds to the sulfur atom.

At least one of $R^e$ and $R^f$ may bond to X. A specific structure where at least one of $R^e$ and $R^f$ bonds to X includes a polymethylene group structure as mentioned above. Examples of the polymethylene group include a dimethylene group, a trimethylene group, a tetramethylene group, a pentamethylene group, a hexamethylene group, etc.

Also as mentioned above, especially preferred is a case where one of $R^e$ and $R^f$ is a hydrogen atom or a methyl group and the other bonds to X, providing a cyclic polymethylene group structure.

Concretely, preferred examples of the thioamide compound (B-2) represented by the general formula (II) include thioacetamide, thiopropionamide, thioacetanilide, 4-chlorothiobenzamide, 4-hydroxythiobenzamide, ε-thiocaprolactam, 1-methylpyrrolidine-2-thione, N-phenylthiobenzamide, thiobenzamide, etc. The structures of these specific compounds are represented by the following formulae:

[Chem. 8]

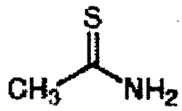

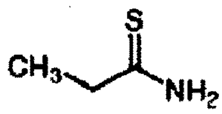

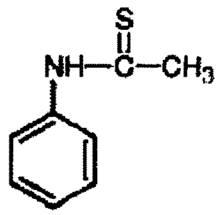

Thioacetamide Thiopropionamide Thioacetanilide

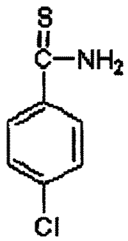

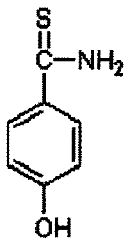

4-Chlorothiobenzamide 4-Hydroxythiobenzamide

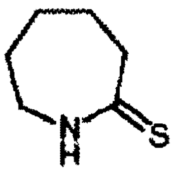

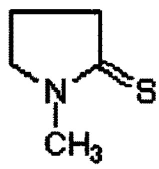

ε-thiocaprolactam 1-Methylpyrrolidine-2-thione

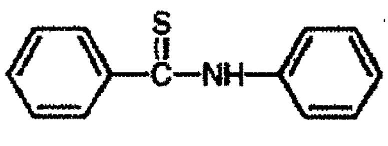

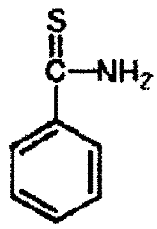

N-phenylthiobenzamide Thiobenzamide

Of those thioamide compounds (B-2), especially preferred is use of thioacetamide, thiobenzamide and 1-methylpyrrolidine-2-thione. Using thioacetamide, thiobenzamide and 1-methylpyrrolidine-2-thione is especially preferred as facilitating the interaction with the silane coupling agent (D), if any, in the rubber composition as described below.

The thioamide compound (B-2) is incorporated in an amount of generally from 0.1 to 5 parts by mass per 100 parts by mass of the rubber component. Preferably, the amount is from 0.2 to 3 parts by mass, more preferably from 0.3 to 2 parts by mass. The amount of the thioamide compound (B-2) falling within a range of from 0.1 to 5 parts by mass increases the dispersing effect of the filler containing an inorganic filler (C) in the rubber composition.

The description of the filler, the inorganic filler (C), the carbon black, the silane coupling agent (D), the vulcanizing agent, the vulcanization promoter and the organic acid compound to be given hereunder is common to the rubber composition of the present invention and also to the rubber composition production methods of present invention.

[Filler]

Filler capable of being added to existing rubber compositions is usable as the filler in the present invention, including the inorganic filler (C).
As the filler in the present invention, the inorganic filler (C) may be used along with any other filler, or the inorganic filler (C) may be used alone.
The filler must contain the inorganic filler (C) and this is for improving the low-heat-generation property of the rubber composition.

<Inorganic Filler (C) >

In the present invention, silica is preferred as the inorganic filler (C) from the viewpoint of satisfying both low rolling property and abrasion resistance. As silica, any commercially-available one is usable here; and above all, preferred is wet method silica, dry method silica or colloidal silica, and more preferred is wet method silica. Preferably, the BET specific surface area (as measured according to ISO 5794/1) of silica for use herein is from 40 to 350 $m^2/g$. Silica of which the BET specific surface area falls within the range is advantageous in that it satisfies both rubber-reinforcing capability and dispersibility in rubber component. From this viewpoint, silica of which the BET specific surface area falls within a range of from 80 to 350 $m^2/g$ is more preferred, silica of which the BET specific surface area falls within a range of from more than 130 $m^2/g$ to 350 $m^2/g$ or less is even more preferred, and silica of which the BET specific surface area falls within a range of from 135 to 350 $m^2/g$ is especially preferred. As silicas of those types, usable here are commercial products of Tosoh Silica's trade names "Nipsil AQ" (BET specific surface area = 205 $m^2/g$) and "Nipsil KQ" (BET specific surface area = 240 $m^2/g$), Degussa's trade name "Ultrasil VN3" (BET specific surface area = 175 $m^2/g$), etc.
In the rubber composition containing the inorganic filler (C), especially silica therein, incorporating a compound selected from the hydroxy group-having thiourea derivative (B-1) and the thioamide compound (B-2) greatly improves the dispersibility of the inorganic filler (C), especially silica, and therefore significantly improves the low-heat-generation property of the rubber composition.
In the rubber composition containing the inorganic filler (C), especially silica therein, it is desirable that the silane coupling agent (D) is incorporated for the purpose of increasing the ability of silica to reinforce the rubber composition or for enhancing the low-heat-generation property and also the abrasion resistance of the rubber composition.
In the rubber composition containing the inorganic filler (C), especially silica and the silane coupling agent (D) therein, it is considered that the compound selected from the hydroxy group-having thiourea derivative (B-1) and the thioamide compound (B-2)could favorably promote the reaction between the inorganic filler (C) and the silane coupling agent (D). To that effect, in the rubber composition of the present invention, in particular, the dispersibility of silica is greatly enhanced, and therefore the low-heat-generation property of the rubber composition can be thereby significantly improved.
The details of the silane coupling agent (D) are described below.

<Amount of Filler>

Preferably, the filler is in an amount of from 20 to 150 parts by mass per 100 parts by mass of the rubber component (A). When the amount is at least 20 parts by mass, then it is favorable from the viewpoint of improving the ability to reinforce the rubber composition; and when at most 150 parts by mass, then it is favorable from the viewpoint of reducing the rolling resistance (improving the low-heat-generation property).
Preferably, the amount of the inorganic filler (C) is from 20 to 120 parts by mass per 100 parts by mass of the rubber component. When the amount is at least 20 parts by mass, then it is favorable from the viewpoint of securing wet performance; and when at most 120 parts by mass, then it is favorable from the viewpoint of reducing the rolling resistance. Further, the amount is more preferably from 30 to 100 parts by mass.
From the viewpoint of satisfying both the wet performance and the rolling resistance reduction, preferably, the amount of the inorganic filler (C) in the filler is 30% by mass or more, more preferably 40% by mass or more, even more preferably 70% by mass or more.
In case where silica is used as the inorganic filler (C), the amount of silica to be in the filler is preferably 30% by mass or more.
The rubber composition of the present invention includes, besides silica, an inorganic compound represented by the following general formula (A).

$$dM^1 \cdot xSiO_y \cdot zH_2O \qquad (A)$$

wherein in the general formula (A), $M^1$ represents at least one selected from a metal selected from aluminum, magnesium,

titanium, calcium and zirconium, oxides and hydroxides of these metals, hydrates thereof, and carbonate salts of these metals; and d, x, y and z represent an integer of from 1 to 5, an integer of from 0 to 10, an integer of from 2 to 5 and an integer of from 0 to 10, respectively.

In the case where both x and z are 0 in the general formula (A), the inorganic compound becomes at least one metal selected from aluminum, magnesium, titanium, calcium and zirconium, or an oxide or a hydroxide of the metal.

Examples of the inorganic compound represented by the general formula (A) include alumina ($Al_2O_3$) such as γ-alumina and α-alumina; alumina hydrate ($Al_2O_3 \cdot H_2O$) such as boemite and diaspora; aluminum hydroxide ($Al(OH)_3$) such as gibbsite and bayerite; aluminum carbonate ($Al_2(CO_3)_3$); magnesium hydroxide ($Mg(OH_2)$); magnesium oxide ($MgO$); magnesium carbonate ($MgCO_3$); talc ($3MgO \cdot 4SiO_2 \cdot H_2O$); attapulgite ($5MgO \cdot 8SiO_2 \cdot 9H_2O$); titanium white ($TiO_2$); titanium black ($TiO_{2n-1}$); calcium oxide ($CaO$); calcium hydroxide ($Ca(OH)_2$); aluminum magnesium oxide ($MgO \cdot Al_2O_3$); clay ($Al_2O_3 \cdot 2SiO_2$); kaolin ($Al_2O_3 \cdot 2SiO_2 \cdot 2H_2O$); pyrophyllite ($Al_2O_3 \cdot 4SiO_2 \cdot H_2O$); bentonite ($Al_2O_3 \cdot 4SiO_2 \cdot 2H_2O$); aluminum silicate (such as $Al_2SiO_5$ and $Al_4 \cdot 3SiO_4 \cdot 5H_2O$), magnesium silicate (such as $Mg_2SiO_4$ and $MgSiO_3$); calcium silicate (such as $Ca_2 \cdot SiO_4$); aluminum calcium silicate (such as $Al_2O_3 \cdot CaO \cdot 2SiO_2$); magnesium calcium silicate ($CaMgSiO_4$); calcium carbonate ($CaCO_3$); zirconium oxide ($ZrO_2$); zirconium hydroxide ($ZrO(OH)_2 \cdot nH_2O$); zirconium carbonate ($Zr(CO_3)_2$); crystalline aluminosilicate salts and the like containing hydrogen, an alkali metal or an alkaline earth metal, which compensates the charge, such as various kinds of zeolite. Furthermore, at least one selected from metallic aluminum, an oxide or a hydroxide of aluminum, hydrates thereof, and aluminum carbonate, where $M^1$ is aluminum in the general formula (A), is preferred.

The inorganic compound represented by the general formula (A) may be used solely or as a mixture of two or more kinds thereof. The inorganic compound preferably has an average particle diameter in a range of from 0.01 to 10 μm, and more preferably in a range of from 0.05 to 5 μm, from the standpoint of the balance among the kneading processability, the abrasion resistance and the wet grip performance, and the like.

As the inorganic filler (C) in the present invention, silica may be used solely, or silica and at least one of the inorganic compound represented by the general formula (A) may be used in combination.

<Carbon Black>

The filler of the present invention may contain carbon black depending on necessity. As carbon black, those commercially available can be used. Carbon black contained may provide an effect of decreasing the electric resistance and preventing static charge. The carbon black used is not particularly limited, and preferred examples thereof used include carbon black of the grades SAF, ISAF, IISAF, N339, HAF, FEF, GPF and SRF, with high, medium or low structure, and preferred examples among these include carbon black of the grades SAF, ISAF, IISAF, N339, HAF and FEF.

The DBP adsorption of the carbon black is preferably from $80cm^3/100g$ or more, more preferably $100cm^3/100g$ or more, most preferably $110cm^3/100g$ or more.

The carbon black preferably has a nitrogen adsorption specific surface area of from 85 $m^2/g$ or more, more preferably 100 $m^2/g$ or more, most preferably 110 $m^2/g$ or more ($N_2SA$, measured according to JIS K6217-2 (2001)).

<Silane Coupling Agent (D)>

The silane coupling agent (D) which can be used in combination with an inorganic filler (C) is preferably at least one compound selected from the group consisting of compounds represented by the following general formulae (V) to (VIII).

The following general formulae (V) to (VIII) will be described in this order below.

[Chem. 12] $(R^1O)_{3-p}(R^2)_pSi\text{-}R^3\text{-}S_a\text{-}R^3\text{-}Si(OR^1)_{3-r(}R^2)_r$ ... (V)

wherein $R^1$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^2$, plural groups of which may be the same as or different from each other, each represent a linear, cyclic or branched alkyl group having from 1 to 8 carbon atoms; $R^3$, plural groups of which may be the same as or different from each other, each represent a linear or branched alkylene group having from 1 to 8 carbon atoms; a represents a number of from 2 to 6 in terms of average value, and p and r may be the same as or different from each other and each represent a number of from 0 to 3 in terms of average value, provided that both p and r are not 3 simultaneously.

Specific examples of the silane coupling agent (D) represented by the general formula (V) include bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3-monoethoxydimethylsilylpropyl) trisulfide, bis(3-monoethoxydimethylsilylpropyl) disulfide, bis(3-monomethoxydimethylsilylpropyl) tetrasulfide, bis(3-monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide and bis(2-monoethoxydimethylsilylethyl) disulfide.

[Chem. 13]

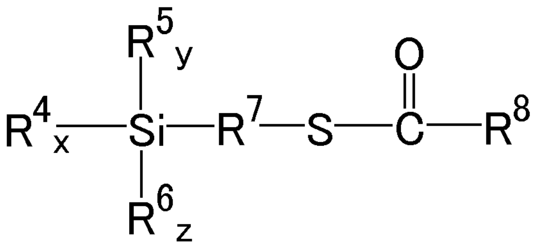

··· (VI)

wherein $R^4$ represents a monovalent group selected from -Cl, -Br, $R^9O$-, $R^9C(=O)O$-, $R^9R^{10}C=NO$-, $R^9R^{10}CNO$-, $R^9R^{10}N$- and $-(OSiR^9R^{10})_h(OSiR^9R^{10}R^{11})$ (wherein $R^9$, $R^{10}$ and $R^{11}$ each represent a hydrogen atom or a monovalent hydrocarbon group having from 1 to 18 carbon atoms; and h represents a number of from 1 to 4 in terms of average value) ; $R^5$ represents $R^4$, a hydrogen atom or a monovalent hydrocarbon group having from 1 to 18 carbon atoms; $R^6$ represents $R^4$, $R^5$, a hydrogen atom or a group represented by $-(O(R^{12}O)_j)_{0.5}$ (wherein $R^{12}$ represents an alkylene group having from 1 to 18 carbon atoms; and j represents an integer of from 1 to 4); $R^7$ represents a divalent hydrocarbon group having from 1 to 18 carbon atoms; $R^8$ represents a monovalent hydrocarbon group having from 1 to 18 carbon atoms; and x, y and z represent numbers that satisfy relationships, $x + y + 2z = 3$, $0 \leq x \leq 3$, $0 \leq y \leq 2$, and $0 \leq z \leq 1$.

In the general formula (VI), $R^8$, $R^9$, $R^{10}$ and $R^{11}$ may be the same as or different from each other, and each preferably represent a group selected from the group consisting of a linear, cyclic or branched alkyl group having from 1 to 18 carbon atoms, an alkenyl group, an aryl group and an aralkyl group. In the case where $R^5$ represents a monovalent hydrocarbon group having from 1 to 18 carbon atoms, they each preferably represent a group selected from a linear, cyclic or branched alkyl group, an alkenyl group, an aryl group and an aralkyl group. $R^{12}$ preferably represents a linear, cyclic or branched alkylene group, and particularly preferably a linear group. Examples of the group represented by $R^7$ include an alkylene group having from 1 to 18 carbon atoms, an alkenylene group having from 2 to 18 carbon atoms, a cycloalkylene group having from 5 to 18 carbon atoms, a cycloalkylalkylene group having from 6 to 18 carbon atoms, an arylene group having from 6 to 18 carbon atoms and aralkylene group having from 7 to 18 carbon atoms. The alkylene group and the alkenylene group each may be linear or branched, and the cycloalkylene group, the cycloalkylalkylene group, the arylene group and the aralkylene group each may have a substituent, such as a lower alkyl group, on the ring. Preferred examples of the group represented by $R^7$ include an alkylene group having from 1 to 6 carbon atoms, and particularly preferred examples thereof include a linear alkylene group, such as a methylene group, an ethylene group, a trimethylene group, a tetramethylene group, a pentamethylene group and a hexamethylene group.

Specific examples of the monovalent hydrocarbon group having from 1 to 18 carbon atoms represented by $R^5$, $R^8$, $R^9$, $R^{10}$ and $R^{11}$ include a methyl group, an ethyl group, a n-propyl group, an isopropyl group, a n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group and a naphthylmethyl group.

Specific examples of the group represented by $R^{12}$ in the general formula (VI) include a methylene group, an ethylene group, a trimethylene group, a tetramethylene group, a pentamethylene group, a hexamethylene group, an octamethylene group, a decamethylene group and a dodecamethylene group.

Specific examples of the silane coupling agent (D) represented by the general formula (VI) include 3-hexanoylthiopropyltriethoxysilane, 3-octanoylthiopropyltriethoxysilane, 3-decanoylthiopropyltriethoxysilane, 3-lauroylthiopropyltriethosysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane and 2-lauroylthioethyltrimethoxysilane. Among these, 3-octanoylthiopropyltriethoxysilane ("NXT Silane", a trade name, produced by General Electric Silicones,

Inc.) is particularly preferred.

[Chem. 14] $(R^{13}O)_{3-s}(R^{14})_sSi-R^{15}-S_k-R^{16}-S_k-R^{15}-Si(OR^{13})_{3-t}(R^{14})_t$ ... (VII)

wherein $R^{13}$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^{14}$, plural groups of which may be the same as or different from each other, each represent a linear, cyclic or branched alkyl group having from 1 to 8 carbon atoms; $R^{15}$, plural groups of which may be the same as or different from each other, each represent a linear or branched alkylene group having from 1 to 8 carbon atoms; $R^{16}$ represents a divalent group selected from $(-S-R^{17}-S-)$, $(-R^{18}-S_{m1}-R^{19}-)$ and $(-R^{20}-S_{m2}-R^{21}-S_{m3}-R^{22}-)$ (wherein $R^{17}$ to $R^{22}$ each represent a divalent hydrocarbon group having from 1 to 20 carbon atoms, a divalent aromatic group or a divalent organic group containing a hetero element other than sulfur and oxygen; and m1, m2 and m3 each represent a number of 1 or more and less than 4 in terms of average value); k, plural numbers of which may be the same as or different from each other, each represent a number of from 1 to 6 in terms of average value; and s and t each represent a number of from 0 to 3 in terms of average value, provided that both s and t are not 3 simultaneously.

Specific examples of the silane coupling agent (D) represented by the general formula (VII) include compounds represented by average compositional formula $(CH_3CH_2O)_3Si-(CH_2)_3-S_2-(CH_2)_6-S_2-(CH_2)_3-Si(OCH_2CH_3)_3$, average compositional formula $(CH_3CH_2O)_3Si-(CH_2)_3-S_2-(CH_2)_{10}-S_2-(CH_2)_3-Si(OCH_2CH_3)_3$, average compositional formula $(CH_3CH_2O)_3Si-(CH_2)_3-S_3-(CH_2)_6-S_3-(CH_2)_3-Si(OCH_2CH_3)_3$, average compositional formula $(CH_3CH_2O)_3Si-(CH_2)_3-S_4-(CH_2)_6-S_4-(CH_2)_3-Si(OCH_2CH_3)_3$, average compositional formula $(CH_3CH_2O)_3Si-(CH_2)_3-S-(CH_2)_6-S_2-(CH_2)_6-S-(CH_2)_3-Si(OCH_2CH_3)_3$, average compositional formula $(CH_3CH_2O)_3Si-(CH_2)_3-S-(CH_2)_6-S_{2.5}-(CH_2)_6-S-(CH_2)_3-Si(OCH_2CH_3)_3$, average compositional formula $(CH_3CH_2O)_3Si-(CH_2)_3-S-(CH_2)_6-S_3-(CH_2)_6-S-(CH_2)_3-Si(OCH_2CH_3)_3$, average compositional formula $(CH_3CH_2O)_3Si-(CH_2)_3-S-(CH_2)_6-S_4-(CH_2)_6-S-(CH_2)_3-Si(OCH_2CH_3)_3$, average compositional formula $(CH_3CH_2O)_3Si-(CH_2)_3-S-(CH_2)_{10}-S_2-(CH_2)_{10}-S-(CH_2)_3-Si(OCH_2CH_3)_3$, average compositional formula $(CH_3CH_2O)_3Si-(CH_2)_3-S_4-(CH_2)_6-S_4-(CH_2)_6-S_4-(CH_2)_3-Si(OCH_2CH_3)_3$, average compositional formula $(CH_3CH_2O)_3Si-(CH_2)_3-S_2-(CH_2)_6-S_2-(CH_2)_6-S_2-(CH_2)_3-Si(OCH_2CH_3)_3$, and average compositional formula $(CH_3CH_2O)_3Si-(CH_2)_3-S-(CH_2)_6-S_2-(CH_2)_6-S_2-(CH_2)_6-S-(CH_2)_3-Si(OC\ H_2CH_3)_3$.

The silane coupling agent (D) represented by the general formula (IV) may be produced, for example, by the method described in JP-A-2006-167919.

[Chem. 15]

$$\underbrace{[R^{23}-C(=O)-S-G-SiZ^a{}_uZ^b{}_vZ^c{}_w]_m}_{A}\underbrace{[HS-G-SiZ^a{}_uZ^b{}_vZ^c{}_w]_n}_{B} \quad \cdots \text{(VIII)}$$

wherein $R^{23}$ represents a linear, branched or cyclic alkyl group having from 1 to 20 carbon atoms; G, plural groups of which may be the same as or different from each other, each represent an alkanediyl group or an alkenediyl group each having from 1 to 9 carbon atoms; $Z^a$, plural groups of which may be the same as or different from each other, each represent a group that is capable of being bonded to two silicon atoms and represent a functional group selected from $(-O-)_{0.5}$, $(-O-G-)_{0.5}$ and $(-O-G-O-)_{0.5}$; $Z^b$, plural groups of which may be the same as or different from each other, each represent a group that is capable of being bonded to two silicon atoms and represent a functional group represented by $(-O-G-O-)_{0.5}$; $Z^c$, plural groups of which may be the same as or different from each other, each represent a functional group selected from -Cl, -Br, $-OR^x$, $R^xC(=O)O-$, $R^xR^yC=NO-$, $R^xR^yN-$, $R^x-$ and HO-G-O- (wherein G agrees with the aforementioned expression); $R^x$ and $R^y$ each represent a linear, branched or cyclic alkyl group having from 1 to 20 carbon atoms; m, n, u, v and w satisfy $1 \le m \le 20$, $0 \le n \le 20$, $0 \le u \le 3$, $0 \le v \le 2$, $0 \le w \le 1$, and $(u/2)+v+2w = 2$ or 3; when there are plural moieties represented by A, $Z^a{}_u$, $Z^b{}_v$ and $Z^c{}_w$ each in the plural moieties represented by A may each be the same as or different from each other; and when there are plural moieties represented by B, $2^a{}_u$, $Z^b{}_v$ and $Z^c{}_w$ each in the plural moieties represented by B may each be the same as or different from each other.

Specific examples of the silane coupling agent (D) represented by the general formula (VIII) include the chemical formula (IX), the chemical formula (X) and the chemical formula (XI) below.

[Chem. 16]

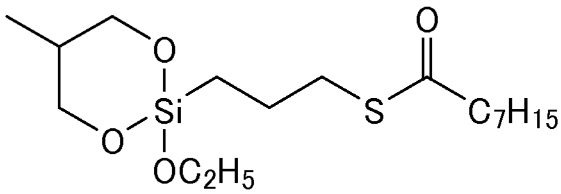

・・・(IX)

[Chem. 17]

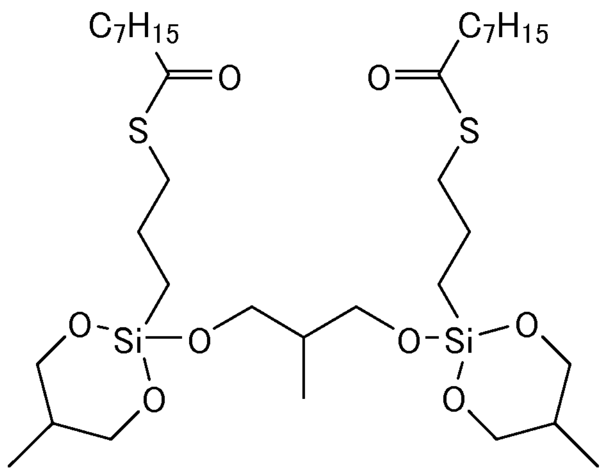

・・・(X)

[Chem. 18]

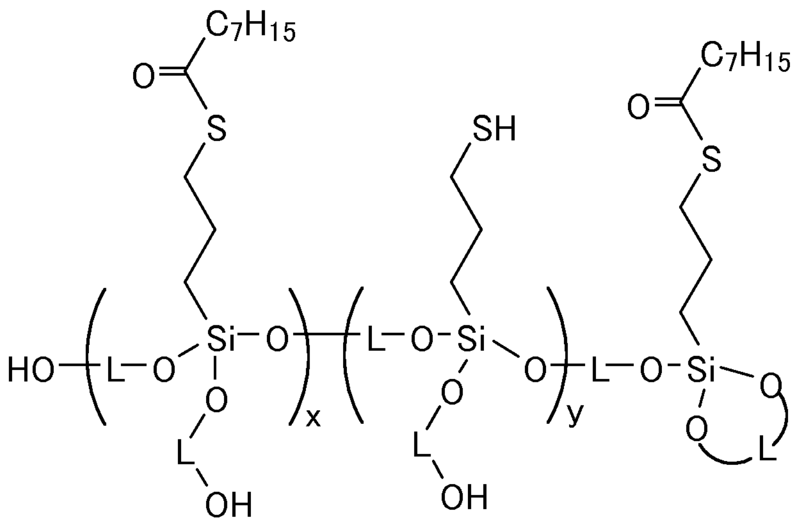

・・・(XI)

wherein L each independently represent an alkanediyl group or an alkenediyl group each having from 1 to 9 carbon atoms; x = m; and y = n.

As the silane coupling agent represented by the chemical formula (IX), "NTX Low-V Silane", a trade name,

produced by Momentive Performance Materials, Inc., is commercially available.

As the silane coupling agent represented by the chemical formula (X), "NTX Ultra Low-V Silane", a trade name, produced by Momentive Performance Materials, Inc., is similarly commercially available.

As the silane coupling agent represented by the chemical formula (XI), "NTX-Z", a trade name, produced by Momentive Performance Materials, Inc., may be mentioned.

The silane coupling agent (D) in the present invention is especially preferably the compound represented by the general formula (V) among the compounds represented by the general formulae (V) to (VIII). This is because the compound selected from the hydroxy group-having thiourea derivative (B-1) and the thioamide compound (B-2) can readily activate the polysulfide bond site that reacts with the rubber component (A).

In the present invention, one alone or two or more different types of the silane coupling agents (D) may be used either singly or as combined.

The amount of the silane coupling agent (D) to be in the rubber composition of the present invention is preferably from (1/100) to (20/100) as the ratio by mass {silane coupling agent (D) /inorganic filler (C)}. When the ratio is (1/100) or more, then the rubber composition can more favorably exhibit the effect of improving the low-heat-generation property; and when (20/100) or less, then the cost of the rubber composition may lower and the economic potential thereof may increase. Further, the ratio by mass is more preferably from (3/100) to (20/100), even more preferably from (4/100) to (10/100).

In the present invention where the inorganic filler (C) such as silica or the like is incorporated in the rubber composition, preferably, the silane coupling agent (D) is incorporated in the rubber composition for the purpose of enhancing the ability of silica to reinforce the rubber composition or for the purpose of enhancing the low-heat-generation property of the rubber composition and also enhancing the abrasion resistance thereof. However, when the reaction between the inorganic filler (C) and the silane coupling agent (D) is insufficient, then the inorganic filler (C) could not fully exhibit the effect thereof to reinforce the rubber composition, and if so, the abrasion resistance of the composition may lower. Further, when the silane coupling agent that has remained unreacted in the kneading step in preparing the rubber composition reacts in the extrusion step that is carried out after the kneading step, then the extrusion-molded article of the rubber composition would be porous (that is, the article would have many foams or pores), and the accuracy of the dimension and the weight of the extrusion-molded article would be thereby lowered.

As opposed to this, when the frequency of the kneading stages in the kneading step is increased, then the reaction between the inorganic filler (C) and the silane coupling agent (D) could be finished in the kneading step and therefore the formation of the porous structure could be evaded. However, this is problematic in that the productivity in the kneading step greatly lowers.

In the rubber composition of the present invention, the compound selected from the hydroxy group-having thiourea derivative (B-1) and the thioamide compound (B-2) favorably promotes the reaction between the inorganic filler (C) and the silane coupling agent (D), and therefore a rubber composition having an excellent low-heat-generation property can be obtained here. To that effect, according to the rubber composition of the present invention, there are provided pneumatic tires which are excellent in workability in rubber processing and have a low-heat-generation property.

In particular, the hydroxy group of the thiourea derivative (B-1) interacts with silica, therefore enhancing the reaction between the silane coupling agent and the rubber component to provide an excellent low-heat-generation property.

The total amount of the compound selected from the hydroxy group-having thiourea derivative (B-1) and the thioamide compound (B-2), which is contained in the rubber composition containing the silane coupling agent (D) of the present invention, is preferably from (2/100) to (200/100) as the ratio by mass of [{hydroxy group-having thiourea derivative (B-1) and thioamide compound (B-2)}/silane coupling agent (D)]. When the ratio is (2/100) or more, then the silane coupling agent (D) could be fully activated; and when (200/100) or less, then the compound would not have any significant influence on the vulcanization speed. The amount of the compound selected from the hydroxy group-having thiourea derivative (B-1) and the thioamide compound (B-2), [{hydroxy group-having thiourea derivative (B-1) and thioamide compound (B-2 to be mentioned} /silane coupling agent (D)], is even more preferably from (5/100) to (100/100).

[Vulcanizing Agent, Vulcanization Promoter]

In the rubber composition of the present invention, incorporated are a vulcanizing agent and a vulcanization promoter. The vulcanizing agent includes sulfur, etc. Not specifically defined, the vulcanization promoter includes thiazole-type vulcanization promoters such as M (2-mercaptobenzothiazole), DM (dibenzothiazolyl disulfide), CZ (N-cyclohexyl-2-benzothiazolylsulfenamide), etc.; guanidine vulcanization promoters such as DPG (diphenylguanidine), etc.

[Organic Acid Compound]

The organic acid compound in the present invention includes saturated fatty acids and unsaturated fatty acids

such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linolic acid, linolenic acid, nervonic acid, etc.; as well as resin acids such as rosin acid, modified rosin acid, etc.; esters of the above-mentioned saturated fatty acids and unsaturated fatty acids, esters of resin acids, etc.

In the present invention, the acid compound must exhibit the function thereof as a vulcanization promoter aid, and therefore preferably, stearic acid accounts for 50 mol% or more of the organic acid compound.

In case where an emulsion-polymerized styrene-butadiene copolymer is used as all or a part of the rubber component (A), it is desirable that 50 mol% or more of the organic acid compound is the rosin acid (including modified rosin acid) and/or fatty acid contained in the emulsion-polymerized styrene-butadiene copolymer, from the viewpoint of the emulsifying agent to be used in producing the emulsion-polymerized styrene-butadiene copolymer.

[Production Method for Rubber Composition]

The first aspect of the present invention relating to the production method for the rubber composition of the invention is a method for producing the rubber composition that contains the rubber component (A), the hydroxy group-having thiourea derivative (B-1) represented by the general formula (I), and the filler containing the inorganic filler (C), and the method includes at least a first kneading stage of kneading the rubber component (A), the hydroxy group-having thiourea derivative (B-1), and all or a part of the inorganic filler (C), and, after the first kneading stage, a final kneading stage of adding thereto a vulcanizing agent and further kneading them.

In the above-mentioned general formula (I), the preferred embodiments of $R^a$, $R^b$, $R^c$ and $R^d$ are the same as those in rubber composition of the first embodiment of the present invention mentioned above. Especially preferably, the hydroxy group-having thiourea derivative (B-1) is one represented by the general formula (I) in which $R^a$ is a functional group selected from an allyl group, an alkyl group-substituted allyl group, and an allyl group-having alkenyl group, $R^b$ is a hydrogen atom, $R^c$ is a functional group selected from a hydroxy group-having alkyl group, a hydroxy group-having alkenyl group and a hydroxy group-having aryl group, and $R^d$ is a hydrogen atom.

From the viewpoint of bettering the dispersion of the inorganic filler (C) such as silica or the like in the rubber composition and for improving the low-heat-generation property of the rubber composition, it is desirable to add the silane coupling agent (D) in the first kneading stage.

The production method for the rubber composition of the second aspect of the present invention is a method for producing the rubber composition that contains the rubber component (A), the thioamide compound (B-2) represented by the general formula (II), the filler containing the inorganic filler (C), and the silane coupling agent (D), wherein the rubber composition is kneaded in plural stages, and in the first kneading stage (the first stage of kneading), the rubber component (A), all or a part of the inorganic filler (C), all or a part of the silane coupling agent (D), and the thioamide compound (B-2) represented by the general formula (II) are kneaded.

Embodiments of the production method of the present invention are described below.

In the following description, the compound selected from the hydroxy group-having thiourea derivative (B-1), and the thioamide compound (B-2) is abbreviated as "compound X".

In the rubber composition production method of the present invention, for bettering the dispersion of the inorganic filler (C) such as silica or the like in the rubber composition, preferably, the maximum temperature of the rubber composition in the first kneading stage of kneading the rubber component (A), the compound X and all or a part of the inorganic filler (C) is from 120 to 190°C, more preferably from 130 to 175°C, even more preferably from 140 to 170°C.

The kneading time in the first kneading stage is preferably from 10 seconds to 20 minutes, more preferably from 10 seconds to 10 minutes, even more preferably from 30 seconds to 5 minutes.

In the first kneading step in the rubber composition production method of the present invention, preferably, the compound X is added in a ratio by mass {compound X/silane coupling agent (D)} of form (2/100) to (200/100). The amount of (2/100) or more fully provides the activation of the silane coupling agent (D), and the amount of (200/100) or less would not have any significant influence on the vulcanization speed. More preferably, the compound X is added in a ratio by mass {compound X/silane coupling agent (D)} of form (2/100) to (100/100), even more preferably from (5/100) to (100/100).

In the method of putting the compound X into the system in the first kneading stage in the rubber composition production method of present invention, in which the rubber composition contains the inorganic filler (C) and the silane coupling agent (D), preferably, the compound X is added thereto after the rubber component (A), all or a part of the inorganic filler (C) and all or a part of the silane coupling agent have been kneaded, and the resulting composition is further kneaded. This is because, according to the adding method of the type, the reaction between the silane coupling agent (D) and the rubber component (A) can be promoted after the reaction between the silane coupling agent (D) and silica has sufficiently run on, and therefore the dispersibility of the inorganic filler (C) can be further improved.

The time to be taken until the compound X is added during the course of the first kneading stage after the rubber component (A), all or a part of the inorganic filler (C) and all or a part of the silane coupling agent (D) have been

added in the first kneading stage in the present invention, is preferably from 10 to 180 seconds. More preferably, the upper limit of the time is 150 seconds or less, even more preferably 120 seconds or less. Within the time of 10 seconds or more, the reaction between the inorganic filler (C) and the silane coupling agent (D) can be sufficiently promoted. Even though the time is over 180 seconds, no one could hardly enjoy any additional effect since the reaction between the inorganic filler (C) and the silane coupling agent (D) has already been sufficiently promoted, and consequently, the upper limit is preferably 180 seconds.

The rubber composition in the rubber composition production method of the present invention is prepared mainly by kneading the rubber component (A) and the inorganic filler (C), and in general, the composition is prepared in two stages of a master batch kneading stage that is a step before incorporation of a vulcanizing agent and a vulcanization promoter thereinto, and a final kneading stage of incorporating the vulcanizing agent and the vulcanization promoter to prepare a vulcanizable rubber composition.

The above-mentioned first kneading stage corresponds to the master batch kneading stage in this embodiment. Specifically, the first kneading stage in the present invention is a stage in which the composition does not contain any vulcanization chemical. Here, the vulcanization chemical is meant to indicate a chemical relating to vulcanization, concretely including a vulcanizing agent and a vulcanization promoter. The first kneading stage in the present invention is the first stage of kneading the rubber component (A), the compound X, and the filer containing the inorganic filler (C), and does not include a case of kneading the rubber component (A) and the filler except the inorganic filler (C) in the first stage and a case of pre-kneading the rubber component (A) alone.

Between the first kneading stage and the final kneading stage, the production method may include an intermediate kneading stage mainly for lowering the viscosity of the master batch.

In the master batch kneading stage in the rubber composition production method of the present invention, at least the rubber component (A), the compound X, all or a part of the inorganic filler (C) and all or a part of the silane coupling agent (D) may be kneaded and the alcohol such as ethanol or the like and the other volatile organic component that are produced during the reaction between the inorganic filler (C) and the silane coupling agent (D) can be evaporated away during the kneading operation. Accordingly, it is possible to prevent alcohol and others from being evaporated away in the extrusion step to be carried out after the master batch kneading step, and it is therefore possible to prevent a porous structure from being formed in the extrusion-molded article.

In case where a master batch could hardly be produced in one master batch kneading stage, or if desired, the master batch kneading stage may be divided into a first master batch kneading stage and a second master batch kneading stage (intermediate kneading stage).

For example, in the first kneading stage (or that is, in the master batch kneading stage), the rubber component (A), all or a part of the inorganic filler (C) and all or a part of the silane coupling agent (D) may be kneaded as the first master batch kneading stage, then the resulting mixture is spontaneously cooled and aged, and thereafter the compound X may be added thereto as the second master batch kneading stage.

In the intermediate kneading stage such as the second master batch kneading stage or the like, the rubber component, the filler and others may be added and kneaded.

In case where the production method includes the intermediate kneading stage after the first kneading stage and before the final kneading stage, the maximum temperature of the rubber composition in the intermediate kneading stage is preferably from 120 to 190°C, more preferably from 130 to 175°C, even more preferably from 140 to 170°C. The kneading time is preferably from 10 seconds to 20 minutes, more preferably from 10 seconds to 10 minutes, even more preferably from 30 seconds to 5 minutes. In case where the production method includes the intermediate kneading stage, it is desirable that the rubber composition is processed in the next stage after the temperature thereof is lowered by 10°C or more than the temperature after the kneading in the previous stage.

The final kneading stage is a step of adding the vulcanization chemical (vulcanizing agent, vulcanization promoter) and kneading the composition. The maximum temperature of the rubber composition in the final kneading stage is preferably from 60 to 140°C, more preferably from 80 to 120°C, even more preferably from 100 to 120°C. The kneading time is preferably from 10 seconds to 20 minutes, preferably from 10 seconds to 10 minutes, more preferably from 20 seconds to 5 minutes.

When the composition is processed in the first kneading stage, the intermediate kneading stage and the final kneading stage in that order, it is desirable that the temperature of the composition is lowered by 10°C or more than the temperature thereof after kneading in the previous kneading stage.

In the rubber composition production method of the present invention, in general, various additives, for example, a vulcanization activator, an antiaging agent or the like such as stearic acid, zinc oxide and others to be incorporated in the rubber composition may be, if desired, kneaded in the composition in the master batch kneading stage or the final kneading stage, or in the above-mentioned intermediate kneading stage.

In the present invention, the rubber composition is kneaded with a Banbury mixer, a roll, an intensive mixer or the like. Afterwards, the composition is extruded and worked in the subsequent extrusion step and is thus formed as tread members. Subsequently, this is stuck and shaped according to an ordinary method using a tire forming machine,

thereby forming an unvulcanized tire. The unvulcanized tire is heated under pressure in a vulcanizing machine to give a tire. In the present invention, the tread means the cap tread to constitute the grounding part of a tire and/or a base tread to be arranged inside the cap tread.

[Examples]

The present invention is described in more detail with reference to the following Examples; however, the present invention is not limited at all by the following Examples.

[Evaluation Methods]

<Low-Heat-Generation Property (tanδ index) in Tables 1 to 7>

Using a viscoelasticity measuring device (by Rheometric), tanδ of the rubber composition sample was measured at a temperature of 60°C, at a dynamic strain of 5% and at a frequency of 15 Hz. Based on the reciprocal number of the tanδ in Comparative Example 1, 9, 11, 16, 21, 28 or 35, as referred to 100, the data were expressed as index indication according to the following formula. The samples having a larger index value have a better low-heat-generation property and have a smaller hysteresis loss.

Low Heat-Generation Index = {(tanδ of vulcanized rubber composition in Comparative Example 1, 9, 11, 16, 21, 28 or 35)/(tanδ of vulcanized rubber composition tested)} x 100 <Low-Heat-Generation Property (tanδ index) in Table 8>

Using a spectrometer (by Ueshima Seisakusho), tanδ of the rubber composition sample was measured at a frequency of 52 Hz, at an initial strain of 10%, at a temperature of 60°C and at a dynamic strain of 1%. Based on the tanδ in Comparative Example 43, as referred to 100, the data were expressed as index indication according to the following formula. The samples having a smaller index value have a better low-heat-generation property and have a smaller hysteresis loss.

Low Heat-Generation Index = {(tanδ of vulcanized rubber composition tested)/(tanδ of vulcanized rubber composition in Comparative Example 43)} × 100

Note] The index value indicating the low-heat-generation property (tanδ index) in Table 8 and the index value indicating the low-heat-generation property (tanδ index) in Tables 1 to 7 bear a reciprocal relationship to each other.

<Abrasion Resistance (index) in Table 1 and Table 8>

According to JIS K 6264-2:2005 and using a Lambourn abrasion tester, the depth of wear was measured at room temperature (23°C) and under the condition of a slip ratio 25%. Based on the reciprocal of the depth of wear in Comparative Example 1 or 43, as referred to 100, the data were expressed as index indication according to the following formula. The samples having a larger index value have better abrasion resistance.

Abrasion Resistance Index = {(depth of wear of vulcanized rubber composition of Comparative Example 1 or 43)/(depth of wear of vulcanized rubber composition tested)} × 100

<Abrasion Resistance (index) in Table 2 and Table 7>

The tire to be tested was put on a passenger car, and at the time when the car was driven for 10,000 km, the depth of wear of the tire was measured. Based on the depth of wear of the tire in in Comparative Example 9 or 35, as referred to 100, the data were expressed as index indication according to the following formula. The samples having a larger index value have better abrasion resistance.

(Depth of wear of sample in Comparative Example 9 or 35)/(depth of wear of tested sample) × 100

Production Example 1: Production of Silane Coupling Agent Represented by Mean Compositional Formula $(CH_3CH_2O)_3Si\text{-}(CH_2)_3\text{-}S\text{-}(CH_2)_6\text{-}S_{2.5}\text{-}(CH_2)_6\text{-}S\text{-}(CH_2)_3\text{-}Si(OCH_2CH_3)_3$

119 g (0.5 mol) of 3-mercaptopropyltriethoxysilane was put into a 2-liter separable flask equipped with a nitrogen gas introducing duct, a thermometer, a Dimroth condenser and a dropping funnel, and with stirring, and 151.2 g (0.45 mol) of an ethanol solution of sodium ethoxide having an active ingredient concentration of 20% by mass was added thereto. Subsequently, this was heated up to 80°C and kept stirred for 3 hours. Afterwards, this was cooled and transferred into the dropping funnel.

Next, 69.75 g (0.45 mol)of 1,6-dichlorohexane was put into the same type of a separable flask as above, heated up to 80°C, and then the reaction product of the above-mentioned 3-mercaptopropyltriethoxysilane and sodium ethoxide was slowly and dropwise added thereto. After the addition, this was kept stirred at 80°C for 5 hours. Subsequently, this was cooled, then the salt was separated through filtration from the resulting solution, and further ethanol and the excessive 1,6-dichlorohexane were evaporated away under reduced pressure. The resulting solution was vaporized under reduced pressure to give 137.7 g of a colorless transparent liquid having a boiling point of 148 to 150°C/0.005 Torr (0.67 Pa). As a result of IR analysis, $^1$H-NMR analysis and mass spectrometry (MS analysis) thereof, the product was a compound represented by $(CH_3CH_2O)_3Si\text{-}(CH_2)_3S\text{-}(CH_2)_6\text{-}Cl$. The purity through gas chromatography (GC analysis) was 97.5%.

Next, 80 g of ethanol, 5.46 g (0.07 mol) of anhydrous sodium sulfide and 3.36 g (0.105 mol) of sulfur were put into a 0.5-ml separable flask of the same type as above, and heated up to 80°C. With stirring this solution, 49.94 g (0.14 mol) of the above-mentioned $(CH_3CH_2O)_3Si\text{-}(CH_2)_3S\text{-}(CH_2)_6\text{-}Cl$ was slowly and dropwise added thereto. After the addition, this was kept stirred at 80°C for 10 hours. After the stirring, this was cooled, the formed salt was through filtration, and the solvent ethanol was evaporated away under reduced pressure.

The obtained, red-brownish transparent solution was analyzed through IR analysis, $^1$H-NMR analysis and supercritical chromatography, and as a result, the product was identified as a compound represented by $(CH_3CH_2O)_3Si\text{-}(CH_2)_3\text{-}S\text{-}(CH_2)_6\text{-}S_{2.5}\text{-}(CH_2)_6\text{-}S\text{-}(CH_2)_3\text{-}Si(OCH_2CH_3)_3$. The purity of the compound in GPC analysis was 85.2%.

Production Example 2: Synthesis Method for 2-Hydroxyethyl-thiourea

A dichloromethane (10 L) solution of 2-ethanolamine (61 g, 1.0 mol) and thiocarbonyldiimidazole (TCDI, 200 g, 1.2 mol) was stirred at room temperature for 2 hours. An aqueous 25% ammonia solution (2.0 L, excessive amount) was added thereto, and the reaction mixture was kept stirred overnight at room temperature. The solvent was removed, and the resulting residue was purified through silica gel chromatography using methanol and dichloromethane as eluents to give a white solid. As a result of IR analysis, $^1$H-NMR analysis and mass spectrometry (MS analysis) thereof, the product was a compound, 2-hydroxyethyl-thiourea (111 g, 0.93 mol, yield 93%).

Production Example 3: Synthesis Method for 3-Hydroxypropyl-thiourea

A dichloromethane (10 L) solution of 3-propanolamine (75 g, 1.0 mol) and thiocarbonyldiimidazole (TCDI, 200 g, 1.2 mol) was stirred at room temperature for 2 hours. An aqueous 25% ammonia solution (2.0 L, excessive amount) was added thereto, and the reaction mixture was kept stirred overnight at room temperature. The solvent was removed, and the resulting residue was purified through silica gel chromatography using methanol and dichloromethane as eluents to give a white solid. As a result of IR analysis, $^1$H-NMR analysis and mass spectrometry (MS analysis) thereof, the product was a compound, 3-hydroxypropyl-thiourea (123 g, 0.92 mol, yield 92%).

Examples 1 to 12

In the first kneading stage in kneading, a rubber component (A), a hydroxy group-having thiourea derivative (B-1), carbon black, an inorganic filler (C), a silane coupling agent (D), aromatic oil, stearic acid and an antiaging agent 6PPD were kneaded in a Banbury mixer, and the maximum temperature of the rubber composition in the first kneading stage was controlled to be 150°C.

Next, in the final stage of kneading, the remaining components shown in Table 1 were added and kneaded, and the maximum temperature of the rubber composition in the final kneading stage was controlled to be 110°C.

The low-heat-generation property (tanδ index) and the abrasion resistance of the vulcanized rubber composition

obtained from the above rubber composition were evaluated according to the above-mentioned methods. The results are shown in Table 1.

Example 13

The components were kneaded in the same manner as in Examples 1 to 12 except that the hydroxy group-having thiourea derivative (B-1) was not added in the first kneading stage but was added in the final kneading stage. The low-heat-generation property (tanδ index) and the abrasion resistance of the thus-obtained, vulcanized rubber composition were evaluated according to the above-mentioned methods. The results are shown in Table 1.

Example 14

In the first kneading stage in kneading, a rubber component (A), carbon black, an inorganic filler (C), a silane coupling agent (D), aromatic oil, stearic acid and an antiaging agent 6PPD were kneaded for 60 seconds and then, a hydroxy group-having thiourea derivative (B-1) was added thereto and further kneaded. The maximum temperature of the rubber composition in the first kneading stage was controlled to be 150°C.

Next, in the final stage of kneading, the remaining components shown in Table 1 were added and kneaded, and the maximum temperature of the rubber composition in the final kneading stage was controlled to be 110°C.

The low-heat-generation property (tanδ index) and the abrasion resistance of the vulcanized rubber composition obtained from the above rubber composition were evaluated according to the above-mentioned methods. The results are shown in Table 1.

Comparative Examples 1 to 8

The components were kneaded in the same manner as in Examples 1 to 12 except that the hydroxy group-having thiourea derivative (B-1) was not added in the first kneading stage (in the first stage of kneading). The low-heat-generation property (tanδ index) and the abrasion resistance of the thus-obtained, vulcanized rubber composition were evaluated according to the above-mentioned methods. The results are shown in Table 1.

[Table 1]

Table 1

| | | Components (part by mass) | Example | | | | | | | | | | | | | | Comparative Example | | | | | | | |
|---|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 1 | 2 | 3 | 4 | 5 | 6 | 7 | 8 |
| Components of Rubber Composition | First Kneading Stage | SBR *1 | 100 | 100 | 100 | 100 | 100 | 100 | 50 | 50 | 50 | 100 | 100 | 100 | 100 | 100 | 100 | 50 | 100 | 50 | 100 | 50 | 100 | 50 |
| | | Natural Rubber *2 | - | - | - | - | - | - | 50 | 50 | 50 | - | - | - | - | - | - | 50 | - | 50 | - | 50 | - | 50 |
| | | Carbon Black-1 N220 *3 | 10 | 10 | 10 | 10 | 10 | 10 | 10 | 10 | 10 | 10 | 10 | 10 | 10 | 10 | 10 | 10 | 10 | 10 | 10 | 10 | 10 | 10 |
| | | Silica *4 | 50 | 50 | 50 | 50 | 50 | 50 | 50 | 50 | 50 | 50 | 50 | 50 | 50 | 50 | 50 | 50 | 50 | 50 | 50 | 50 | 50 | 50 |
| | | Silane Coupling Agent-1 *5 | 5 | 5 | 5 | 5 | 5 | 5 | 5 | 5 | 5 | - | - | - | 5 | 5 | 5 | 5 | - | - | - | - | - | - |
| | | Silane Coupling Agent-2 *6 | - | - | - | - | - | - | - | - | - | 5 | - | - | - | - | - | - | 5 | 5 | - | - | - | - |
| | | Silane Coupling Agent-3 *7 | - | - | - | - | - | - | - | - | - | - | 5 | - | - | - | - | - | - | - | 5 | 5 | - | - |
| | | Silane Coupling Agent-4 *8 | - | - | - | - | - | - | - | - | - | - | - | 5 | - | - | - | - | - | - | - | - | 5 | 5 |
| | | Thiourea Derivative (B)-(a) *9 | 0.25 | 0.5 | 1 | 2 | - | - | 1 | - | - | 1 | 1 | 1 | - | 1 | - | - | - | - | - | - | - | - |
| | | Thiourea Derivative (B)-(b) *10 | - | - | - | - | 1 | - | - | 1 | - | - | - | - | - | - | - | - | - | - | - | - | - | - |
| | | Thiourea Derivative (B)-(c) *11 | - | - | - | - | - | 1 | - | - | 1 | - | - | - | - | - | - | - | - | - | - | - | - | - |
| | | Aromatic Oil | 30 | 30 | 30 | 30 | 30 | 30 | 30 | 30 | 30 | 30 | 30 | 30 | 30 | 30 | 30 | 30 | 30 | 30 | 30 | 30 | 30 | 30 |
| | | Stearic Acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | | Antiaging Agent 6PPD *12 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Final Kneading Stage | Thiourea Derivative (B)-(a) *9 | - | - | - | - | - | - | - | - | - | - | - | - | 1 | - | - | - | - | - | - | - | - | - |
| | | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | | Antiaging Agent TMDQ *13 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | | Vulcanization Promoter DPG *14 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Vulcanization Promoter MBTS *15 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | | Vulcanization Promoter TBBS *16 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Properties of Vulcanized Rubber | | Low-Heat-Generation Property (tanδ index) | 119 | 122 | 125 | 126 | 118 | 117 | 120 | 115 | 114 | 118 | 117 | 120 | 110 | 127 | 100 | 101 | 105 | 106 | 106 | 107 | 104 | 105 |
| | | Abrasion Resistance Index | 104 | 105 | 106 | 107 | 102 | 103 | 105 | 103 | 104 | 95 | 105 | 103 | 102 | 107 | 100 | 101 | 92 | 93 | 100 | 101 | 98 | 99 |

[Notes] The following *1 to *16 are for Table 1.

*1: Asahi Kasei's solution-polymerized SBR, product name "Toughden 2000"

*2: RSS#3

*3: N220 (ISAF), by Asahi Carbon, product name "#80"

*4: Tosoh Silica's product name "Nipsil AQ", having BET surface area of 205 $m^2/g$

*5: Bis(3-triethoxysilylpropyl) disulfide(mean sulfur chain length: 2.35), Evonik's silane coupling agent, product name "Si75"®

*6: 3-Octanoylthiopropyltriethoxysilane, by Momentive Performance Materials, product name "NXT Silane"®

*7: Silane coupling agent represented by chemical formula (VII), by Momentive Performance Materials, product name "NXT-Z"®

*8: Silane coupling agent obtained in Production Example 1 $(CH_3CH_2O)_3Si-(CH_2)_3-S-(CH_2)_6-S_{2.5}-(CH_2)_6-S-(CH_2)_3-Si(OCH_2CH_3)_3$

*9: Thiourea derivative (B-1)-(a): 1-allyl-3-(2-hydroxyethyl)-2-thiourea, by Tokyo Chemical Industry, product name "1-Allyl-3-(2-Hydroxyethyl)-2-Thiourea"

*10: Thiourea derivative (B-1)-(b): 2-hydroxyethyl-thiourea obtained in Production Example 2

*11: Thiourea derivative (B-1)-(c): 3-hydroxypropyl-thiourea

obtained in Production Example 3

*12: N-(1,3-dimethylbutyl)-N'-phenyl-p-phenylenediamine, by Ouchi Shinko Chemical Industry, product name "Nocrac 6C"

*13: 2,2,4-Trimethyl-1,2-dihydroquinoline polymer, by Ouchi Shinko Chemical Industry, product name "Nocrac 224"

*14: 1,3-Diphenylguanidine, by Sanshin Chemical Industry, product name "Sanceler D"

*15: Di-2-benzothiazolyl Disulfide, by Sanshin Chemical Industry, product name "Sanceler DM"

*16: N-tert-butyl-2-benzothiazolylsulfenamide, by Sanshin Chemical Industry, product name "Sanceler NS"

As obvious from Table 1, the rubber compositions of Examples 1 to 14 all have a good low-heat-generation property (tanδ index) and good abrasion resistance, as compared with the comparative rubber compositions of Comparative Examples 1 to 8.

Examples 15 to 23

In the first kneading stage in kneading, a rubber component (A), a thioamide compound (B-2), carbon black, an inorganic filler (C), a silane coupling agent (D), aromatic oil, stearic acid and an antiaging agent 6PPD were kneaded in a Banbury mixer, and the maximum temperature of the rubber composition in the first kneading stage was controlled to be 150°C. Next, in the final stage of kneading, the remaining components shown in Table 2 were added and kneaded, and the maximum temperature of the rubber composition in the final kneading stage was controlled to be 110°C.

The low-heat-generation property (tanδ index) and the abrasion resistance of the vulcanized rubber composition obtained from the above rubber composition were evaluated according to the above-mentioned methods. The results are shown in Table 2.

Comparative Examples 9 to 10

The components were kneaded in the same manner as in Examples 15 to 23 except that the thioamide compound (B-2) was not added in the first kneading stage. The low-heat-generation property (tanδ index) and the abrasion resistance of the thus-obtained, vulcanized rubber composition were evaluated according to the above-mentioned methods. The results are shown in Table 2.

[Table 2]

Table 2

| | Comparative Example | | Example | | | | | | | | |
|---|---|---|---|---|---|---|---|---|---|---|---|
| Components (part by weight) | 9 | 10 | 15 | 16 | 17 | 18 | 19 | 20 | 21 | 22 | 23 |
| SBR *1 | 100 | 50 | 100 | 100 | 100 | 100 | 100 | 100 | 50 | 50 | 50 |
| Natural Rubber *2 | 0 | 50 | 0 | 0 | 0 | 0 | 0 | 0 | 50 | 50 | 50 |
| Carbon Black-1 N220 *3 | 10 | 10 | 10 | 10 | 10 | 10 | 10 | 10 | 10 | 10 | 10 |

(continued)

| | Comparative Example | | Example | | | | | | | | |
|---|---|---|---|---|---|---|---|---|---|---|---|
| Silica *4 | 50 | 50 | 50 | 50 | 50 | 50 | 50 | 50 | 50 | 50 | 50 |
| Silane Coupling Agent Si75 *5 | 5 | 5 | 5 | 5 | 5 | 5 | 5 | 5 | 5 | 5 | 5 |
| Compound (B)-(a) *6 | 0 | 0 | 0.25 | 0.5 | 1 | 2 | 0 | 0 | 1 | 0 | 0 |
| Compound (B)-(b) *7 | 0 | 0 | 0 | 0 | 0 | 0 | 1 | 0 | 0 | 1 | 0 |
| Compound (B)-(c) *8 | 0 | 0 | 0 | 0 | 0 | 0 | 0 | 1 | 0 | 0 | 1 |
| Aromatic Oil | 30 | 30 | 30 | 30 | 30 | 30 | 30 | 30 | 30 | 30 | 30 |
| Stearic Acid | 2 | 2 | 2 | 2 | 2 | 2 | 2 | 2 | 2 | 2 | 2 |
| Vulcanization Promoter DPG *9 | 0.6 | 0.6 | 0.6 | 0.6 | 0.6 | 0.6 | 0.6 | 0.6 | 0.6 | 0.6 | 0.6 |
| Antiaging Agent TMDQ *10 | 1 | 1 | 1 | 1 | 1 | 1 | 1 | 1 | 1 | 1 | 1 |
| Zinc oxide | 2.5 | 2.5 | 2.5 | 2.5 | 2.5 | 2.5 | 2.5 | 2.5 | 2.5 | 2.5 | 2.5 |
| Antiaging Agent 6PPD *11 | 1 | 1 | 1 | 1 | 1 | 1 | 1 | 1 | 1 | 1 | 1 |
| Vulcanization Promoter MBTS *12 | 1 | 1 | 1 | 1 | 1 | 1 | 1 | 1 | 1 | 1 | 1 |
| Vulcanization Promoter TBBS *13 | 0.6 | 0.6 | 0.6 | 0.6 | 0.6 | 0.6 | 0.6 | 0.6 | 0.6 | 0.6 | 0.6 |
| Sulfur | 1.5 | 1.5 | 1.5 | 1.5 | 1.5 | 1.5 | 1.5 | 1.5 | 1.5 | 1.5 | 1.5 |
| Properties of Vulcanized Rubber: low-heat-generation property (tanδ index) | 100 | 101 | 116 | 118 | 119 | 120 | 120 | 117 | 115 | 119 | 116 |
| Properties of Vulcanized Rubber: abrasion resistance index | 100 | 103 | 101 | 102 | 103 | 104 | 104 | 102 | 105 | 107 | 106 |

[Notes] The following *1 to *13 are for Table 2. *1: Asahi Kasei's solution-polymerized SBR, product name "T2000"
*2: JSR's RSS#3
*3: Asahi Carbon's product name "#80"
*4: Tosoh Silica's product name "Nipsil AQ", having BET surface area of 220 $m^2/g$
*5: Bis(3-triethoxysilylpropyl) disulfide(mean sulfur chain length: 2.35), Evonik's silane coupling agent, product name "Si75"
*6: Thioacetamide
*7: Thiobenzamide
*8: 1-Methylpyrrolidine-2-thione
*9: 1,3-Diphenylguanidine, by Sanshin Chemical Industry, product name "Sanceler D"
*10: 2,2,4-Trimethyl-1,2-dihydroquinoline polymer, by Ouchi Shinko Chemical Industry, product name "Nocrac 224"
*11: N-(1,3-dimethylbutyl)-N'-phenyl-p-phenylenediamine, by Ouchi Shinko Chemical Industry, product name "Nocrac 6C"
*12: Di-2-benzothiazolyl Disulfide, by Sanshin Chemical Industry, product name "Sanceler DM"
*13: N-tert-butyl-2-benzothiazolylsulfenamide, by Sanshin Chemical Industry, product name "Sanceler NS"

The rubber compositions of Examples 15 to 23 shown in Table 2 all have a good low-heat-generation property (tanδ index), as compared with the rubber compositions of Comparative Examples 9 to 10.

The rubber compositions of Examples 15 to 20 were obtained by changing the type and the amount of the thioamide compound (B-2) per 100 parts by mass of the synthetic dienic rubber. Of the three types of thioamide compounds (B-2), the case of using thiobenzamide provided the best low-heat-generation property and was excellent in the abrasion resistance index. Of the cases of using thioacetamide, those in which the amount of the compound is larger within a range of from 0.25 parts by mass to 2 parts by mass had a better low-heat-generation property.

The rubber compositions of Examples 21 to 23 were obtained by using a combination of synthetic dienic rubber and natural rubber in a ratio of 1/1 as the rubber component and by changing the type of the thioamide compound (B-2). Of those three types of thioamide compounds (B-2) in these Examples 21 to 23, in case where tiobenzamide is used, thioamide provided the best low-heat-generation property and was excellent in the abrasion resistance index.

On the other hand, in Comparative Example 9 and Comparative Example 10, the rubber compositions did not contain the thioamide compound (B-2) and are therefore known to be poor in the low-heat-generation property and the abrasion resistance index.

[Industrial Applicability]

In the rubber composition of the present invention, the dispersibility of the filler is improved, and the composition has an excellent low-heat-generation property. In addition, in the composition, the activity of the coupling function of the silane coupling agent can be favorably prevented from being lowered, and the coupling function thereof is further enhanced, and therefore the composition has an especially excellent low-heat-generation property. Accordingly, the rubber composition is favorable for constitutive members of various types of pneumatic tires for passenger cars, small-sized trucks, minivans, pickup trucks and large-sized vehicles (trucks, buses, construction vehicles, etc.) and others, especially for tread members of pneumatic radial tires.

## Claims

1. A rubber composition, which contains a rubber component (A), at least one organic sulfur compound (B) selected from a hydroxy group-having thiourea derivative (B-1) represented by the following general formula (I) and a thioamide compound (B-2) represented by the following general formula (II), and a filler containing an inorganic filler (C):

[Chem. 1]

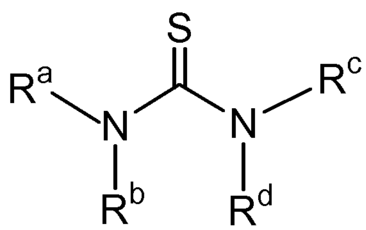

· · · (I)

[wherein $R^a$, $R^b$, $R^c$ and $R^d$ may be the same or different, each representing a functional group selected from an alkyl group, an alkyl group having a hydroxy group, an alkenyl group, an alkenyl group having a hydroxy group, an aryl group and an aryl group having a hydroxy group, or a hydrogen atom, and at least one of $R^a$, $R^b$, $R^c$ and $R^d$ is a functional group selected from an alkyl group having a hydroxy group, an alkenyl group having a hydroxy group and an aryl group having a hydroxy group.],

[Chem. 2]

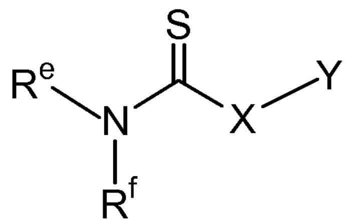

· · · (II)

[wherein $R^e$ and $R^f$ each independently represent any of a hydrogen atom, an aliphatic hydrocarbon group having from 1 to 10 carbon atoms, and an aromatic hydrocarbon group having from 6 to 20 carbon atoms; X represents any of a single bond, an aliphatic hydrocarbon group having from 1 to 10 carbon atoms, and an aromatic hydrocarbon

group having from 6 to 20 carbon atoms; Y represents at least one selected from a hydrogen atom, an alkyl group having from 1 to 5 carbon atoms, a hydroxy group, an amino group and a halogen atom; and at least one of $R^e$ and $R^f$ may bond to X].

**2.** The rubber composition according to claim 1, wherein the organic sulfur compound (B) is a hydroxy group-having thiourea derivative (B-1) represented by the general formula (I).

**3.** The rubber composition according to claim 1, wherein the organic sulfur compound (B) is a thioamide compound (B-2) represented by the general formula (II), and the composition further contains a silane coupling agent (D).

**4.** The rubber composition according to claim 1 or 2, wherein in the hydroxy group-having thiourea derivative (B-1) represented by the general formula (I), $R^a$ is a functional group selected from an allyl group, an alkyl group-substituted allyl group and an allyl group-having alkenyl group, $R^b$ is a hydrogen atom, $R^c$ is a functional group selected from a hydroxy group-having alkyl group, a hydroxy group-having alkenyl group and a hydroxy group-having aryl group, and $R^d$ is a hydrogen atom.

**5.** The rubber composition according to claim 1, 2 or 4, which further contains a silane coupling agent (D).

**6.** The rubber composition according to claim 5, wherein the amount of the hydroxy group-having thiourea derivative (B-1) is, as a ratio by mass of {hydroxy group-having thiourea derivative (B-1)/silane coupling agent (D)}, from (2/100) to (200/100).

**7.** The rubber composition according to claim 1 or 3, wherein the thioamide compound (B-2) is contained in an amount of from 0.1 to 5 parts by mass per 100 parts by mass of the rubber component (A).

**8.** The rubber composition according to any of claims 1 to 7, wherein the inorganic filler (C) is silica.

**9.** A method for producing a rubber composition that contains a rubber component (A), at least one organic sulfur compound (B) selected from a hydroxy group-having thiourea derivative (B-1) represented by the following general formula (I) and a thioamide compound (B-2) represented by the following general formula (II), and a filler containing an inorganic filler (C) ;
the method including at least a first kneading stage of kneading the rubber component (A), the organic sulfur compound (B), and all or a part of the inorganic filler (C), and,
after the first kneading stage, a final kneading stage of adding thereto a vulcanizing agent and further kneading them:

[Chem. 3]

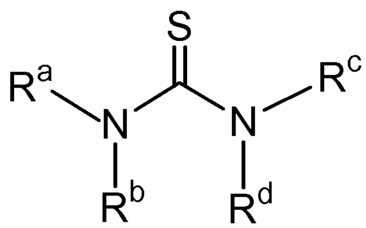

· · · (I)

[wherein $R^a$, $R^b$, $R^c$ and $R^d$ may be the same or different, each representing a functional group selected from an alkyl group, an alkyl group having a hydroxy group, an alkenyl group, an alkenyl group having a hydroxy group, an aryl group and an aryl group having a hydroxy group, or a hydrogen atom, and at least one of $R^a$, $R^b$, $R^c$ and $R^d$ is a functional group selected from an alkyl group having a hydroxy group, an alkenyl group having a hydroxy group and an aryl group having a hydroxy group];

[Chem. 4]

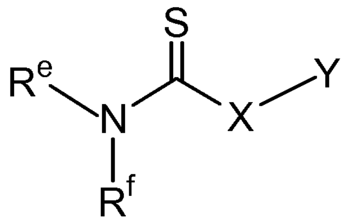

··· (II)

[wherein $R^e$ and $R^f$ each independently represent any of a hydrogen atom, an aliphatic hydrocarbon group having from 1 to 10 carbon atoms, and an aromatic hydrocarbon group having from 6 to 20 carbon atoms; X represents any of a single bond, an aliphatic hydrocarbon group having from 1 to 10 carbon atoms, and an aromatic hydrocarbon group having from 6 to 20 carbon atoms; Y represents at least one selected from a hydrogen atom, an alkyl group having from 1 to 5 carbon atoms, a hydroxy group, an amino group and a halogen atom; and at least one of $R^e$ and $R^f$ may bond to X].

**10.** The method for producing a rubber composition according to claim 9, wherein in the hydroxy group-having thiourea derivative (B-1) represented by the general formula (I), $R^a$ is a functional group selected from an allyl group, an alkyl group-substituted allyl group and an allyl group-having alkenyl group, $R^b$ is a hydrogen atom, $R^c$ is a functional group selected from a hydroxy group-having alkyl group, a hydroxy group-having alkenyl group and a hydroxy group-having aryl group, and $R^d$ is a hydrogen atom.

**11.** The method for producing a rubber composition according to claim 9 or 10, wherein a silane coupling agent (D) is added in the first kneading stage.

**12.** The method for producing a rubber composition according to any of claims 9 to 11, wherein in the first kneading stage, the rubber component (A) and all or a part of the inorganic filler (C) are kneaded, and then the hydroxy group-having thiourea derivative (B-1) is added thereto and further kneaded.

**13.** The method for producing a rubber composition according to claim 9, wherein theat least one organic sulfur compound (B) is a thioamide compound (B-2) represented by the general formula (II) and a silane coupling agent (D) is also present; wherein the rubber composition is kneaded in plural stages, and in the first kneading stage, the rubber component (A), all or a part of the inorganic filler (C), all or a part of the silane coupling agent (D).

**14.** The rubber composition according to any of claims 3 to 8, wherein the silane coupling agent (D) comprises at least one compound selected from the group consisting of the compounds represented by the following general formulae (V) to (VIII):

[Chem. 9] $(R^1O)_{3-p}(R^2)_pSi\text{-}R^3\text{-}S_a\text{-}R^3\text{-}Si(OR)_{3-r(}(R^2)_r$ ··· (V)

wherein $R^1$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^2$, plural groups of which may be the same as or different from each other, each represent a linear, cyclic or branched alkyl group having from 1 to 8 carbon atoms; $R^3$, plural groups of which may be the same as or different from each other, each represent a linear or branched alkylene group having from 1 to 8 carbon atoms; a represents a number of from 2 to 6 in terms of average value and p and r may be the same as or different from each other and each represent a number of from 0 to 3 in terms of average value, provided that both p and r are not 3 simultaneously;

[Chem. 10]

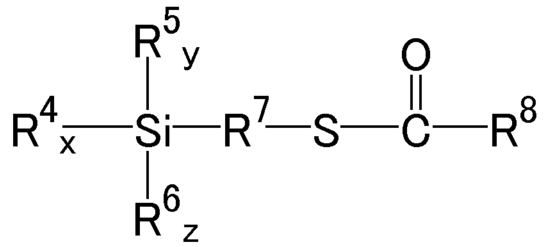

··· (VI)

wherein $R^4$ represents a monovalent group selected from -Cl, -Br, $R^9O$- $R^9C(=O)O$-, $R^9R^{10}C=NO$-, $R^9R^{10}CNO$-, $R^9R^{10}N$- and - $(OSiR^9R^{10})_h(OSiR^9R^{10}R^{11})$ (wherein $R^9$, $R^{10}$ and $R^{11}$ each represent a hydrogen atom or a monovalent hydrocarbon group having from 1 to 18 carbon atoms; and h represents a number of from 1 to 4 in terms of average value) ; $R^5$ represents $R^4$, a hydrogen atom or a monovalent hydrocarbon group having from 1 to 18 carbon atoms; $R^6$ represents $R^4$, $R^5$, a hydrogen atom or a group represented by-$(O(R^{12}O)_j)_{0.5}$ (wherein $R^{12}$ represents an alkylene group having from 1 to 18 carbon atoms; and j represents an integer of from 1 to 4); $R^7$ represents a divalent hydrocarbon group having from 1 to 18 carbon atoms; $R^8$ represents a monovalent hydrocarbon group having from 1 to 18 carbon atoms; and x, y and z represent numbers that satisfy relationships, $x + y + 2z = 3$, $0 \le x \le 3$, $0 \le y \le 2$, and $0 \le z \le 1$;

[Chem. 11] $(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t$ ··· (VII)

wherein $R^{13}$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^{14}$, plural groups of which may be the same as or different from each other, each represent a linear, cyclic or branched alkyl group having from 1 to 8 carbon atoms; $R^{15}$, plural groups of which may be the same as or different from each other, each represent a linear or branched alkylene group having from 1 to 8 carbon atoms; $R^{16}$ represents a divalent group selected from $(\text{-}S\text{-}R^{17}\text{-}S\text{-})$, $(\text{-}R^{18}\text{-}S_{m1}\text{-}R^{19}\text{-})$ and $(\text{-}R^{20}\text{-}S_{m2}\text{-}R^{21}\text{-}S_{m3}\text{-}R^{22}\text{-})$ (wherein $R^{17}$ to $R^{22}$ each represent a divalent hydrocarbon group having from 1 to 20 carbon atoms, a divalent aromatic group or a divalent organic group containing a hetero element other than sulfur and oxygen; and m1, m2 and m3 each represent a number of 1 or more and less than 4 in terms of average value); k, plural numbers of which may be the same as or different from each other, each represent a number of from 1 to 6 in terms of average value; and s and t each represent a number of from 0 to 3 in terms of average value, provided that both s and t are not 3 simultaneously; and

[Chem. 12]

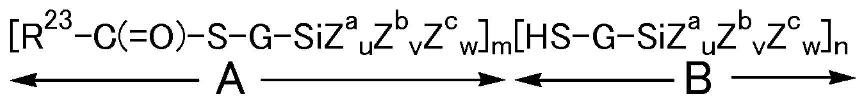

··· (VIII)

wherein $R^{23}$ represents a linear, branched or cyclic alkyl group having from 1 to 20 carbon atoms; G, plural groups of which may be the same as or different from each other, each represent an alkanediyl group or an alkenediyl group each having from 1 to 9 carbon atoms; $Z^a$, plural groups of which may be the same as or different from each other, each represent a group that is capable of being bonded to two silicon atoms and represent a functional group selected from $(\text{-}O\text{-})_{0.5}$, $(\text{-}O\text{-}G\text{-})_{0.5}$ and $(\text{-}O\text{-}G\text{-}O\text{-})_{0.5}$; $Z^b$, plural groups of which may be the same as or different from each other, each represent a group that is capable of being bonded to two silicon atoms and represent a functional group represented by $(\text{-}O\text{-}G\text{-}O\text{-})_{0.5}$; $Z^c$, plural groups of which may be the same as or different from each other, each represent a functional group selected from -Cl, -Br, -$OR^x$, $R^xC(=O)O$-, $R^xR^yC=NO$-, $R^xR^yN$-, $R^x$- and HO-G-O- (wherein G agrees with the aforementioned expression); $R^x$ and $R^y$ each represent a linear, branched or cyclic alkyl group having from 1 to 20 carbon atoms; m, n, u, v and w satisfy $1 \le m \le 20$, $0 \le n \le 20$, $0 \le u \le 3$, $0 \le v \le 2$, $0 \le w \le 1$, and $(u/2)+v+2w = 2$ or 3; when there are plural moieties represented by A, $Z^a_u$, $Z^b_v$ and $Z^c_w$ each in the plural moieties represented by A may each be the same as or different from each other; and when there are plural moieties represented by B, $Z^a_u$, $Z^b_v$ and $Z^c_w$ each in the plural moieties represented by B may each be the same

as or different from each other.

**15.** The method for producing a rubber composition according to any of claims 11 to 13 wherein the silane coupling agent (D) comprises at least one compound selected from the group consisting of the compounds represented by the following general formulae (V) to (VIII):

[Chem. 13] $(R^1O)_{3-p}(R^2)_pSi-R^3-S_a-R^3-Si(OR^1)_{3-r(}R^2)_r$ ··· (V)

wherein $R^1$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^2$, plural groups of which may be the same as or different from each other, each represent a linear, cyclic or branched alkyl group having from 1 to 8 carbon atoms; $R^3$, plural groups of which may be the same as or different from each other, each represent a linear or branched alkylene group having from 1 to 8 carbon atoms; a represents a number of from 2 to 6 in terms of average value and p and r may be the same as or different from each other and each represent a number of from 0 to 3 in terms of average value, provided that both p and r are not 3 simultaneously;

[Chem. 14]

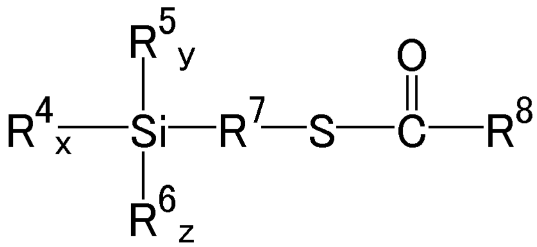

··· (VI)

wherein $R^4$ represents a monovalent group selected from -Cl, -Br, $R^9O$- $R^9C(=O)O$-, $R^9R^{10}C=NO$-, $R^9R^{10}CNO$-, $R^9R^{10}N$- and - $(OSiR^9R^{10})_h(OSiR^9R^{10}R^{11})$ (wherein $R^9$, $R^{10}$ and $R^{11}$ each represent a hydrogen atom or a monovalent hydrocarbon group having from 1 to 18 carbon atoms; and h represents a number of from 1 to 4 in terms of average value) ; $R^5$ represents $R^4$, a hydrogen atom or a monovalent hydrocarbon group having from 1 to 18 carbon atoms; $R^6$ represents $R^4$, $R^5$, a hydrogen atom or a group represented by $-(O(R^{12}O)_j)_{0.5}$ (wherein $R^{12}$ represents an alkylene group having from 1 to 18 carbon atoms; and j represents an integer of from 1 to 4); $R^7$ represents a divalent hydrocarbon group having from 1 to 18 carbon atoms; $R^8$ represents a monovalent hydrocarbon group having from 1 to 18 carbon atoms; and x, y and z represent numbers that satisfy relationships, $x + y + 2z = 3$, $0 \leq x \leq 3$, $0 \leq y \leq 2$, and $0 \leq z \leq 1$;

[Chem. 15] $(R^{13}O)_{3-s}(R^{14})_sSi-R^{15}-S_k-R^{16}-S_k-R^{15}-Si(OR^{13})_{3-t}(R^{14})_t$ ··· (VII)

wherein $R^{13}$, plural groups of which may be the same as or different from each other, each represent a hydrogen atom, a linear, cyclic or branched alkyl group having from 1 to 8 carbon atoms, or a linear or branched alkoxyalkyl group having from 2 to 8 carbon atoms; $R^{14}$, plural groups of which may be the same as or different from each other, each represent a linear, cyclic or branched alkyl group having from 1 to 8 carbon atoms; $R^{15}$, plural groups of which may be the same as or different from each other, each represent a linear or branched alkylene group having from 1 to 8 carbon atoms; $R^{16}$ represents a divalent group selected from $(-S-R^{17}-S-)$, $(-R^{18}-S_{m1}-R^{19}-)$ and $(-R^{20}-S_{m2}-R^{21}-S_{m3}-R^{22}-)$ (wherein $R^{17}$ to $R^{22}$ each represent a divalent hydrocarbon group having from 1 to 20 carbon atoms, a divalent aromatic group or a divalent organic group containing a hetero element other than sulfur and oxygen; and m1, m2 and m3 each represent a number of 1 or more and less than 4 in terms of average value); k, plural numbers of which may be the same as or different from each other, each represent a number of from 1 to 6 in terms of average value; and s and t each represent a number of from 0 to 3 in terms of average value, provided that both s and t are not 3 simultaneously; and

[Chem. 16]

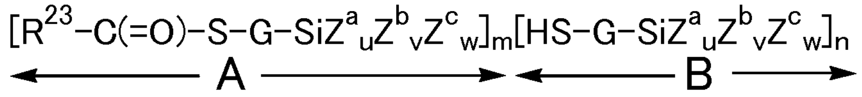

··· (VIII)

wherein $R^{23}$ represents a linear, branched or cyclic alkyl group having from 1 to 20 carbon atoms; G, plural groups of which may be the same as or different from each other, each represent an alkanediyl group or an alkenediyl group each having from 1 to 9 carbon atoms; $Z^a$, plural groups of which may be the same as or different from each other, each represent a group that is capable of being bonded to two silicon atoms and represent a functional group selected from $(-O-)_{0.5}$, $(-O-G-)_{0.5}$ and $(-O-G-O-)_{0.5}$; $Z^b$, plural groups of which may be the same as or different from each other, each represent a group that is capable of being bonded to two silicon atoms and represent a functional group represented by $(-O-G-O-)_{0.5}$; $Z^c$, plural groups of which may be the same as or different from each other, each represent a functional group selected from -Cl, -Br, $-OR^x$, $R^xC(=O)O-$, $R^xR^yC=NO-$, $R^xR^yN-$, $R^x-$ and HO-G-O- (wherein G agrees with the aforementioned expression); $R^x$ and $R^y$ each represent a linear, branched or cyclic alkyl group having from 1 to 20 carbon atoms; m, n, u, v and w satisfy $1 \leq m \leq 20$, $0 \leq n \leq 20$, $0 \leq u \leq 3$, $0 \leq v \leq 2$, $0 \leq w \leq 1$, and $(u/2)+v+2w = 2$ or 3; when there are plural moieties represented by A, $Z^a{}_u$, $Z^b{}_v$ and $Z^c{}_w$ each in the plural moieties represented by A may each be the same as or different from each other; and when there are plural moieties represented by B, $Z^a{}_u$, $Z^b{}_v$ and $Z^c{}_w$ each in the plural moieties represented by B may each be the same as or different from each other.

**Patentansprüche**

**1.** Kautschukzusammensetzung, die eine Kautschukkomponente (A), mindestens eine organische Schwefelverbindung (B) ausgewählt unter einem eine Hydroxygruppe aufweisenden Thioharnstoffderivat (B-1), das durch die folgende allgemeine Formel (I) dargestellt ist, und einer Thioamidverbindung (B-2), die durch die folgende allgemeine Formel (II) dargestellt ist, ausgewählt wird, und einen Füllstoff enthält, der einen anorganischen Füllstoff (C) enthält:

[Chem. 1]

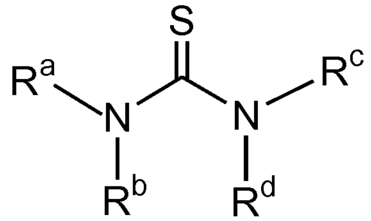

··· (I)

wobei $R^a$, $R^b$, $R^c$ und $R^d$ gleich oder verschieden sein können, wobei jedes eine funktionelle Gruppe darstellt ausgewählt unter einer Alkylgruppe, einer Alkylgruppe, die eine Hydroxygruppe aufweist, einer Alkenylgruppe, einer Alkenylgruppe, die eine Hydroxygruppe aufweist, einer Arylgruppe und einer Arylgruppe, die eine Hydroxygruppe aufweist, oder einem Wasserstoffatom und mindestens eines von $R^a$, $R^b$, $R^c$ und $R^d$ eine funktionelle Gruppe ist ausgewählt unter einer Alkylgruppe, die eine Hydroxygruppe aufweist, einer Alkenylgruppe, die eine Hydroxygruppe aufweist und einer Arylgruppe, die eine Hydroxygruppe aufweist,

[Chem. 2]

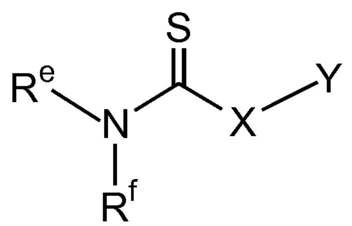

··· (II)

wobei $R^e$ und $R^f$ jeweils unabhängig irgend eines/eine von einem Wasserstoffatom, einer aliphatischen Kohlenwasserstoffgruppe, die 1 bis 10 Kohlenstoffatome aufweist, und einer aromatischen Kohlenwasserstoffgruppe, die 6 bis 20 Kohlenstoffatome aufweist, darstellen; X irgend eine von einer Einfachbindung, einer aliphatischen Kohlenwasserstoffgruppe, die 1 bis 10 Kohlenstoffatome aufweist, und einer aromatischen Kohlenwasserstoffgruppe, die 6 bis 20 Kohlenstoffatome aufweist, darstellt; Y mindestens eines darstellt ausgewählt unter einem Wasserstoffatom, einer Alkylgruppe, die 1 bis 5 Kohlenstoffatome aufweist, einer Hydroxygruppe, einer Aminogruppe und einem Halogenatom; und mindestens eines von $R^e$ und $R^f$ sich an X binden kann.

**2.** Kautschukzusammensetzung nach Anspruch 1, wobei die organische Schwefelverbindung (B) ein eine Hydroxygruppe aufweisendes Thioharnstoffderivat (B-1) ist, das durch die allgemeine Formel (I) dargestellt ist.

**3.** Kautschukzusammensetzung nach Anspruch 1, wobei die organische Schwefelverbindung (B) eine Thioamidverbindung (B-2) ist, die durch die allgemeine Formel (II) dargestellt ist, und die Zusammensetzung ferner einen Silanhaftvermittler (D) enthält.

**4.** Kautschukzusammensetzung nach Anspruch 1 oder 2, wobei in dem eine Hydroxygruppe aufweisenden Thioharnstoffderivat (B-1), das durch die allgemeine Formel (I) dargestellt ist, $R^a$ eine funktionelle Gruppe ist ausgewählt unter einer Allylgruppe, einer mit einer Alkylgruppe substituierten Allylgruppe und einer eine Allylgruppe aufweisenden Alkenylgruppe, $R^b$ ein Wasserstoffatom ist, $R^c$ eine funktionelle Gruppe ist ausgewählt unter einer eine Hydroxygruppe aufweisenden Alkylgruppe, einer eine Hydroxygruppe aufweisenden Alkenylgruppe und einer eine Hydroxygruppe aufweisenden Arylgruppe, und $R^d$ ein Wasserstoffatom ist.

**5.** Kautschukzusammensetzung nach Anspruch 1, 2 oder 4, die ferner einen Silanhaftvermittler (D) enthält.

**6.** Kautschukzusammensetzung nach Anspruch 5, wobei die Menge des eine Hydroxygruppe aufweisenden Thioharnstoffderivats (B-1) als Massenverhältnis von eine Hydroxygruppe aufweisendem Thioharnstoffderivat(B-1)/Silanhaftvermittler (D) (2/100) bis (200/100) beträgt.

**7.** Kautschukzusammensetzung nach Anspruch 1 oder 3, wobei die Thioamidverbindung (B-2) in einer Menge von 0,1 bis 5 Massenteilen pro 100 Massenteile der Kautschukkomponente (A) enthalten ist.

**8.** Kautschukzusammensetzung nach einem der Ansprüche 1 bis 7, wobei der anorganische Füllstoff (C) Siliciumdioxid ist.

**9.** Verfahren für die Herstellung einer Kautschukzusammensetzung, die eine Kautschukkomponente (A), mindestens eine organische Schwefelverbindung (B) ausgewählt unter einem eine Hydroxygruppe aufweisenden Thioharnstoffderivat (B-1), das durch die folgende allgemeine Formel (I) dargestellt ist, und einer Thioamidverbindung (B-2), die durch die folgende allgemeine Formel (II) dargestellt ist, ausgewählt wird, und einen Füllstoff enthält, der einen anorganischen Füllstoff (C) enthält:

wobei das Verfahren mindestens eine erste Knetstufe des Knetens der Kautschukkomponente (A), der organischen Schwefelverbindung (B) und des gesamten oder eines Teils des anorganischen Füllstoffs (C) und nach der ersten Knetstufe eine letzte Knetstufe des Zugebens eines Vulkanisiermittels dazu und weiteres Kneten derselben umfasst:

[Chem. 3]

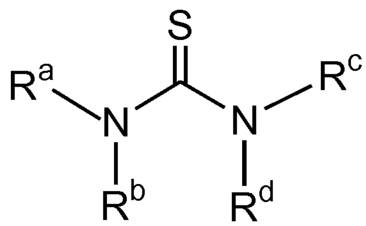

··· (I)

wobei $R^a$, $R^b$, $R^c$ und $R^d$ gleich oder verschieden sein können, wobei jedes eine funktionelle Gruppe darstellt ausgewählt unter einer Alkylgruppe, einer Alkylgruppe, die eine Hydroxygruppe aufweist, einer Alkenylgruppe,

einer Alkenylgruppe, die eine Hydroxygruppe aufweist, einer Arylgruppe und einer Arylgruppe, die eine Hydroxygruppe aufweist, oder einem Wasserstoffatom und mindestens eines von $R^a$, $R^b$, $R^c$ und $R^d$ eine funktionelle Gruppe ist ausgewählt unter einer Alkylgruppe, die eine Hydroxygruppe aufweist, einer Alkenylgruppe, die eine Hydroxygruppe aufweist, und einer Arylgruppe, die eine Hydroxygruppe aufweist,

[Chem. 4]

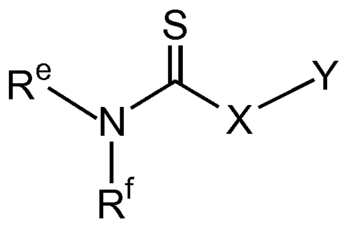

··· (II)

wobei $R^e$ und $R^f$ jeweils unabhängig irgend eines/eine von einem Wasserstoffatom, einer aliphatischen Kohlenwasserstoffgruppe, die 1 bis 10 Kohlenstoffatome aufweist, und einer aromatischen Kohlenwasserstoffgruppe, die 6 bis 20 Kohlenstoffatome aufweist, darstellt; X irgend eine von einer Einfachbindung, einer aliphatischen Kohlenwasserstoffgruppe, die 1 bis 10 Kohlenstoffatome aufweist, und einer aromatischen Kohlenwasserstoffgruppe, die 6 bis 20 Kohlenstoffatome aufweist, darstellt; Y mindestens eines/eine ausgewählt unter einem Wasserstoffatom, einer Alkylgruppe, die 1 bis 5 Kohlenstoffatome aufweist, einer Hydroxygruppe, einer Aminogruppe und einem Halogenatom darstellt; und mindestens eines von $R^e$ und $R^f$ sich an X binden kann.

**10.** Verfahren für die Herstellung einer Kautschukzusammensetzung nach Anspruch 9, wobei in dem eine Hydroxygruppe aufweisenden Thioharnstoffderivat (B-1), das durch die allgemeine Formel (I) dargestellt ist, $R^a$ eine funktionelle Gruppe ist, ausgewählt unter einer Allylgruppe, einer mit einer Alkylgruppe substituierten Allylgruppe und einer eine Allylgruppe aufweisende Alkenylgruppe, $R^b$ ein Wasserstoffatom ist, $R^c$ eine funktionelle Gruppe ist, ausgewählt unter einer eine Hydroxygruppe aufweisenden Alkylgruppe, einer eine Hydroxygruppe aufweisenden Alkenylgruppe und einer eine Hydroxygruppe aufweisenden Arylgruppe, und $R^d$ ein Wasserstoffatom ist.

**11.** Verfahren für die Herstellung einer Kautschukzusammensetzung nach Anspruch 9 oder 10, wobei ein Silanhaftvermittler (D) in der ersten Knetstufe zugegeben wird.

**12.** Verfahren für die Herstellung einer Kautschukzusammensetzung nach einem der Ansprüche 9 bis 11, wobei in der ersten Knetstufe die Kautschukkomponente (A) und der gesamte oder ein Teil des anorganischen Füllstoffs (C) geknetet werden und dann das eine Hydroxygruppe aufweisende Thioharnstoffderivat(B-1) zugegeben und noch weiter geknetet wird.

**13.** Verfahren für die Herstellung einer Kautschukzusammensetzung nach Anspruch 9, wobei die mindestens eine organische Schwefelverbindung (B) eine Thioamidverbindung (B-2) ist, die durch die allgemeine Formel (II) dargestellt ist, und ein Silanhaftvermittler (D) ebenfalls vorliegt; wobei die Kautschukzusammensetzung in mehreren Stufen geknetet wird und in der ersten Knetstufe die Kautschukkomponente (A), der gesamte oder ein Teil des anorganischen Füllstoffs (C), der gesamte oder ein Teil des Silanhaftvermittlers (D) geknetet werden.

**14.** Kautschukzusammensetzung nach einem der Ansprüche 3 bis 8, wobei der Silanhaftvermittler (D) mindestens eine Verbindung umfasst ausgewählt aus der Gruppe bestehend aus den Verbindungen, die durch die folgenden allgemeinen Formeln (V) bis (VIII) dargestellt sind:

[Chem. 9] $(R^1O)_{3-p}(R^2)_pSi\text{-}R^3\text{-}S_a\text{-}R^3\text{-}Si(OR^1)_{3-r}(R^2)_r \cdots$ (V)

wobei $R^1$, mehrere Gruppen derer gleich oder verschieden voneinander sein können, jeweils ein Wasserstoffatom, eine lineare, cyclische oder verzweigte Alkylgruppe, die 1 bis 8 Kohlenstoffatome aufweist, oder eine lineare oder verzweigte Alkoxyalkylgruppe, die 2 bis 8 Kohlenstoffatome aufweist, darstellen; $R^2$, mehrere Gruppen derer gleich oder verschieden voneinander sein können, wobei jede eine lineare, cyclische oder verzweigte Alkylgruppe, die 1 bis 8 Kohlenstoffatome aufweist, darstellen; $R^3$, mehrere Gruppen derer gleich oder verschieden voneinander sein können, jeweils eine lineare oder verzweigte Alkylengruppe, die 1 bis 8 Kohlenstoffatome aufweist, darstellen; a eine Zahl von 2 bis 6 als Durchschnittswert darstellt und p und r gleich oder verschieden voneinander sein können

und jeweils eine Zahl von 0 bis 3 als Durchschnittswert darstellen, vorausgesetzt, dass sowohl p als auch r nicht gleichzeitig 3 betragen;

[Chem. 10]

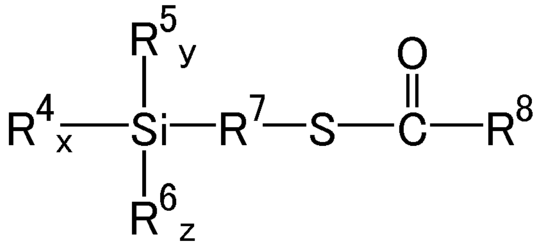

··· (VI)

wobei $R^4$ eine einwertige Gruppe darstellt ausgewählt unter-Cl, -Br, $R^9O$-, $R^9C(=O)O$-, $R^9R^{10}C=NO$-, $R^9R^{10}CNO$-, $R^9R^{10}N$- und $-(OSiR^9R^{10})_h(OSiR^9R^{10}R^{11})$ (wobei $R^9$, $R^{10}$ und $R^{11}$ jeweils ein Wasserstoffatom oder eine einwertige Kohlenwasserstoffgruppe darstellen, die 1 bis 18 Kohlenstoffatome aufweist; und h eine Zahl von 1 bis 4 als Mittelwert darstellt); $R^5$ $R^4$, ein Wasserstoffatom oder eine einwertige Kohlenwasserstoffgruppe darstellt, die 1 bis 18 Kohlenstoffatome aufweist; $R^6$ $R^4$, $R^5$, ein Wasserstoffatom oder eine Gruppe darstellt, die durch $-(O(R^{12}O)_j)_{0,5}$ dargestellt ist (wobei $R^{12}$ eine Alkylengruppe darstellt, die 1 bis 18 Kohlenstoffatome aufweist; und j eine ganze Zahl von 1 bis 4 darstellt); $R^7$ eine zweiwertige Kohlenwasserstoffgruppe darstellt, die 1 bis 18 Kohlenstoffatome aufweist; $R^8$ eine einwertige Kohlenwasserstoffgruppe darstellt, die 1 bis 18 Kohlenstoffatome aufweist; und x, y und z Zahlen darstellen, die die Beziehungen $x + y + 2z = 3,0 \leq x \leq 3,0 \leq y \leq 2$ und $0 \leq z \leq 1$ erfüllen;

[Chem. 11] $(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t$ ··· (VII)

wobei $R^{13}$, mehrere Gruppen derer gleich oder verschieden voneinander sein können, jeweils ein Wasserstoffatom, eine lineare, cyclische oder verzweigte Alkylgruppe, die 1 bis 8 Kohlenstoffatome aufweist, oder eine lineare oder Alkoxyalkylgruppe, die 2 bis 8 Kohlenstoffatome aufweist, darstellen; $R^{14}$, mehrere Gruppen derer gleich oder verschieden voneinander sein können, jeweils eine lineare, cyclische oder verzweigte Alkylgruppe, die 1 bis 9 Kohlenstoffatome aufweist, darstellen; $R^{15}$, mehrere Gruppen derer gleich oder verschieden voneinander sein können, jeweils eine lineare oder verzweigte Alkylengruppe, die 1 bis 8 Kohlenstoffatome aufweist, darstellen; $R^{16}$ eine zweiwertige Gruppe ausgewählt unter $(\text{-}S\text{-}R^{17}\text{-}S\text{-})$, $(\text{-}R^{18}\text{-}S_{m1}\text{-}R^{19}\text{-})$ und $(\text{-}R^{20}\text{-}S_{m2}\text{-}R^{21}\text{-}S_{m3}\text{-}R^{22}\text{-})$ darstellt (wobei $R^{17}$ bis $R^{22}$ jeweils eine zweiwertige Kohlenwasserstoffgruppe, die 1 bis 20 Kohlenstoffatome aufweist, eine zweiwertige aromatische Gruppe oder eine zweiwertige organische Gruppe, die ein Heteroelement enthält, das nicht Schwefel und Sauerstoff ist, darstellen; und m1, m2 und m3 jeweils eine Zahl von 1 oder mehr und weniger als 4 als Durchschnittswert darstellen); k, mehrere Zahlen derer gleich oder verschieden voneinander sein können, jeweils eine Zahl von 1 bis 6 als Durchschnittswert darstellen; und s und t jeweils eine Zahl von 0 bis 3 als Durchschnittswert darstellen, vorausgesetzt, dass sowohl s als auch t nicht gleichzeitig 3 betragen; und

[Chem. 12]

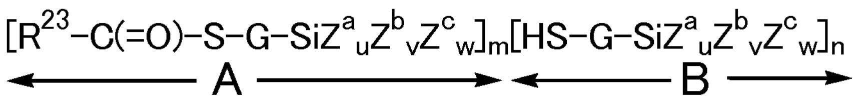

··· (VIII)

wobei $R^{23}$ eine lineare, verzweigte oder cyclische Alkylgruppe darstellt, die 1 bis 20 Kohlenstoffatome aufweist; G, mehrere Gruppen derer gleich oder verschieden voneinander sein können, jeweils eine Alkandiylgruppe oder eine Alkendiylgruppe, die jeweils die 1 bis 9 Kohlenstoffatome aufweist, darstellen; $Z^a$, mehrere Gruppen derer gleich oder verschieden voneinander sein können, jeweils eine Gruppe darstellen, die in der Lage ist, an zwei Siliciumatome gebunden zu werden und eine funktionelle Gruppe darstellt ausgewählt unter$(\text{-}O\text{-})_{0.5}$, $(\text{-}O\text{-}G\text{-})_{0,5}$ und $(\text{-}O\text{-}G\text{-}O\text{-})_{0,5}$; $Z^b$, mehrere Gruppen derer gleich oder verschieden voneinander sein können, jeweils eine Gruppe darstellen, die in der Lage ist, an zwei Siliciumatome gebunden zu werden und eine funktionelle Gruppe darstellt, die durch $(\text{-}O\text{-}G\text{-}O\text{-})_{0,5}$ dargestellt ist; $Z^c$, mehrere Gruppen derer gleich oder verschieden voneinander sein können, jeweils eine funktionelle Gruppe darstellen, die unter -Cl, -Br, $\text{-}OR^x$, $R^xC(=O)O$- , $R^xR^yC=NO$- $R^xR^yN$- $R^x$- und HO-G-O- ausgewählt ist (wobei G mit dem oben erwähnten Ausdruck in Einklang steht); $R^x$ und $R^y$ jeweils eine lineare, verzweigte oder cyclische Alkylgruppe darstellen, die 1 bis 20 Kohlenstoffatome aufweist; m, n, u, v und w $1 \leq m \leq 20$, $0 \leq n \leq$

20, $0 \leq u \leq 3$, $0 \leq v \leq 2$, $0 \leq w \leq 1$, und $(u/2)+v+2w = 2$ oder 3 erfüllen; wenn mehrere Anteile vorliegen, die durch A, $Z^a_u$, $Z^b v$ und $Z^c_w$ dargestellt sind, kann jedes durch A in den mehreren Anteilen dargestellte gleich oder verschieden voneinander sein; und wenn mehrere Anteile durch B, $Z^a_u$, $Z^b v$ und $Z^c_w$ dargestellt sind, kann jedes durch B in den mehreren Anteilen dargestellte gleich oder verschieden voneinander sein.

**15.** Verfahren für die Herstellung einer Kautschukzusammensetzung nach einem der Ansprüche 11 bis 13, wobei der Silanhaftvermittler (D) mindestens eine Verbindung umfasst ausgewählt aus der Gruppe bestehend aus den Verbindungen, die durch die folgenden allgemeinen Formeln (V) bis (VIII) dargestellt sind:

[Chem. 13] $(R^1O)_{3-p}(R^2)_pSi\text{-}R^3\text{-}S_a\text{-}R^3\text{-}Si(OR^1)_{3-r}(R^2)_r$ ··· (V)

wobei $R^1$, mehrere Gruppen derer gleich oder verschieden voneinander sein können, jeweils ein Wasserstoffatom, eine lineare, cyclische oder verzweigte Alkylgruppe, die 1 bis 8 Kohlenstoffatome aufweist, oder eine lineare oder verzweigte Alkoxyalkylgruppe, die 2 bis 8 Kohlenstoffatome aufweist, darstellen; $R^2$, mehrere Gruppen derer gleich oder verschieden voneinander sein können, jeweils eine lineare, cyclische oder verzweigte Alkylgruppe, die 1 bis 8 Kohlenstoffatome aufweist, darstellen; $R^3$, mehrere Gruppen derer gleich oder verschieden voneinander sein können, jeweils eine lineare oder verzweigte Alkylengruppe, die 1 bis 8 Kohlenstoffatome aufweist, darstellen; a eine Zahl von 2 bis 6 als Durchschnittswert darstellt und p und r gleich oder verschieden voneinander sein können und jeweils eine Zahl von 0 bis 3 als Durchschnittswert darstellen, vorausgesetzt, dass sowohl p als auch r nicht gleichzeitig 3 betragen;

[Chem. 14]

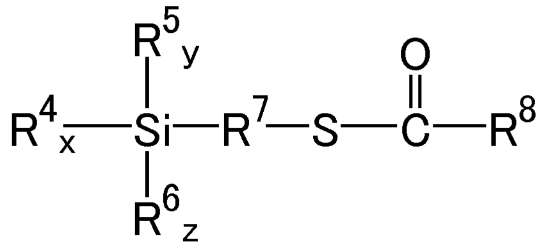

··· (VI)

$R^4$ eine einwertige Gruppe darstellt ausgewählt unter- Cl, -Br, $R^9O$-, $R^9C(=O)O$-, $R^9R^{10}C{=}NO$-, $R^9R^{10}CNO$-, $R^9R^{10}N$- und $-(OSiR^9R^{10})_h(OSiR^9R^{10}R^{11})$ (wobei $R^9$, $R^{10}$ und $R^{11}$ jeweils ein Wasserstoffatom oder eine einwertige Kohlenwasserstoffgruppe darstellen, die 1 bis 18 Kohlenstoffatome aufweist; und h eine Zahl von 1 bis 4 als Mittelwert darstellt); $R^5$ $R^4$, ein Wasserstoffatom oder eine einwertige Kohlenwasserstoffgruppe darstellt, die 1 bis 18 Kohlenstoffatome aufweist; $R^6$ $R^4$, $R^5$ ein Wasserstoffatom oder eine Gruppe darstellt, die durch $-(O(R^{12}O)_j)_{0,5}$ dargestellt ist (wobei $R^{12}$ eine Alkylengruppe darstellt, die 1 bis 18 Kohlenstoffatome aufweist; und j eine ganze Zahl von 1 bis 4 darstellt); $R^7$ eine zweiwertige Kohlenwasserstoffgruppe darstellt, die 1 bis 18 Kohlenstoffatome aufweist; $R^8$ eine einwertige Kohlenwasserstoffgruppe darstellt, die 1 bis 18 Kohlenstoffatome aufweist; und x, y und z Zahlen darstellen, die die Beziehungen $x + y + 2z = 3$, $0 \leq x \leq 3$, $0 \leq y \leq 2$ und $0 \leq z \leq 1$ erfüllen;

[Chem. 15] $(R^{13}O)_{3-s}(R^{14})_sSi\text{-}R^{15}\text{-}S_k\text{-}R^{16}\text{-}S_k\text{-}R^{16}\text{-}Si(OR^{13})_{3-t}(R^{14})_t$ ··· (VII)

wobei $R^{13}$, mehrere Gruppen derer gleich oder verschieden voneinander sein können, jeweils ein Wasserstoffatom, eine lineare, cyclische oder verzweigte Alkylgruppe, die 1 bis 8 Kohlenstoffatome aufweist, oder eine lineare oder verzweigte Alkoxyalkylgruppe, die 2 bis 8 Kohlenstoffatome aufweist, darstellen; $R^{14}$, mehrere Gruppen derer gleich oder verschieden voneinander sein können, jeweils eine lineare, cyclische oder verzweigte Alkylgruppe, die 1 bis 8 Kohlenstoffatome aufweist, darstellen; $R^{15}$, mehrere Gruppen derer gleich oder verschieden voneinander sein können, jeweils eine lineare oder verzweigte Alkylengruppe, die 1 bis 8 Kohlenstoffatome aufweist, darstellen; $R^{16}$ eine zweiwertige Gruppe ausgewählt unter $(-S\text{-}R^{17}\text{-}S\text{-})$, $(-R^{18}\text{-}S_{m1}\text{-}R^{19}\text{-})$ und $(-R^{20}\text{-}S_{m2}\text{-}R^{21}\text{-}S_{m3}\text{-}R^{22}\text{-})$ darstellt (wobei $R^{17}$ bis $R^{22}$ jeweils eine zweiwertige Kohlenwasserstoffgruppe, die 1 bis 20 Kohlenstoffatome aufweist, eine zweiwertige aromatische Gruppe oder eine zweiwertige organische Gruppe, die ein Heteroelement enthält, das nicht Schwefel und Sauerstoff ist, darstellen; und m1, m2 und m3 jeweils eine Zahl von 1 oder mehr und weniger als 4 als Durchschnittswert darstellen); k, mehrere Zahlen derer gleich oder verschieden voneinander sein können, jeweils eine Zahl von 1 bis 6 als Durchschnittswert darstellen; und s und t jeweils eine Zahl von 0 bis 3 als Durchschnittswert darstellen, vorausgesetzt, dass sowohl s als auch t nicht gleichzeitig 3 betragen; und

[Chem. 16]

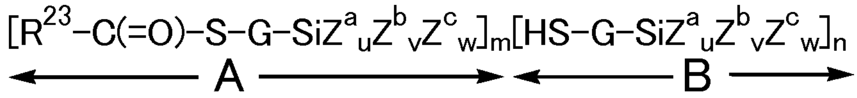 ··· (VIII)

wobei $R^{23}$ eine lineare, verzweigte oder cyclische Alkylgruppe darstellt, die 1 bis 20 Kohlenstoffatome aufweist; G, mehrere Gruppen dessen gleich oder verschieden voneinander sein können, jeweils eine Alkandiylgruppe oder eine Alkendiylgruppe, die jeweils die 1 bis 9 Kohlenstoffatome aufweist, darstellen; $Z^a$, mehrere Gruppen derer gleich oder verschieden voneinander sein können, jeweils eine Gruppe darstellen, die in der Lage ist, an zwei Siliciumatome gebunden zu werden und eine funktionelle Gruppe darstellt ausgewählt unter$(-O-)_{0.5}$, $(-O-G-)_{0,5}$ und $(-O-G-O-)_{0,5}$; $Z^b$, mehrere Gruppen derer gleich oder verschieden voneinander sein können, jeweils eine Gruppe darstellen, die in der Lage ist, an zwei Siliciumatome gebunden zu werden und eine funktionelle Gruppe darstellt, die durch $(-O-G-O-)_{0,5}$ dargestellt ist; $Z^c$, mehrere Gruppen derer gleich oder verschieden voneinander sein können, jeweils eine funktionelle Gruppe darstellen, die unter -C1, -Br, $-OR^x$, $R^xC(=O)O-$, $R^xR^yC=NO-$, $R^xR^yN-$, $R^x-$ und HO-G-O- ausgewählt ist (wobei G mit dem oben erwähnten Ausdruck in Einklang steht); $R^x$ und $R^y$ jeweils eine lineare, verzweigte oder cyclische Alkylgruppe darstellen, die 1 bis 20 Kohlenstoffatome aufweist; m, n, u, v und w $1 \leq m \leq 20$, $0 \leq n \leq 20$, $0 \leq u \leq 3$, $0 \leq v \leq 2$, $0 \leq w \leq 1$ und $(u/2)+v+2w = 2$ oder 3 erfüllen; wenn mehrere Anteile vorliegen, die durch A, $Z^a_u$, $Z^b_v$ und $Z^c_w$ dargestellt sind, kann jedes durch A in den mehreren Anteilen dargestellte gleich oder verschieden voneinander sein; und wenn mehrere Anteile durch B, $Z^a_u$, $Z^b_v$ und $Z^c_w$ dargestellt sind, kann jedes durch B in den mehreren Anteilen dargestellte gleich oder verschieden voneinander sein.

## Revendications

1. Composition de caoutchouc, qui contient un composant de caoutchouc (A), au moins un composé de soufre organique (B) sélectionné parmi un dérivé thiourée possédant un groupe hydroxyle (B-1) représenté par la formule générale suivante (I) et un composé thioamide (B-2) représenté par la formule générale suivante (II), et une charge contenant une charge inorganique (C):

[Chem. 1.

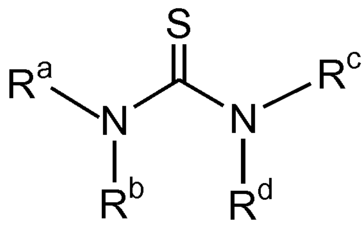 ··· (I)

dans laquelle $R^a$, $R^b$, $R^c$ et $R^d$ peuvent être identiques ou différents, représentant chacun un groupe fonctionnel sélectionné parmi un groupe alkyle, un groupe alkyle possédant un groupe hydroxyle, un groupe alcényle, un groupe alcényle possédant un groupe hydroxyle, un groupe aryle et un groupe aryle possédant un groupe hydroxyle, ou un atome d'hydrogène, et au moins l'un de $R^a$, $R^b$, $R^c$ et $R^d$ est un groupe fonctionnel sélectionné parmi un groupe alkyle possédant un groupe hydroxyle, un groupe alcényle possédant un groupe hydroxyle et un groupe aryle possédant un groupe hydroxyle,

[Chem. 2.

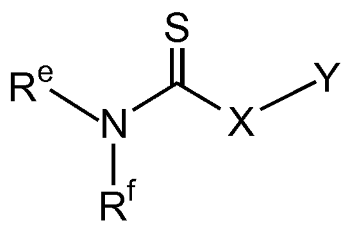 ··· (II)

dans laquelle $R^e$ et $R^f$ chacun indépendamment représente n'importe lequel parmi un atome d'hydrogène, un groupe hydrocarbure aliphatique ayant de 1 à 10 atomes de carbone, et un groupe hydrocarbure aromatique ayant de 6 à

20 atomes de carbone; X représente n'importe lequel parmi une simple liaison, un groupe hydrocarbure aliphatique ayant de 1 à 10 atomes de carbone, et un groupe hydrocarbure aromatique ayant de 6 à 20 atomes de carbone; Y représente au moins l'un sélectionné parmi un atome d'hydrogène, un groupe alkyle ayant de 1 à 5 atomes de carbone, un groupe hydroxyle, un groupe amino et un atome d'halogène; et au moins l'un de $R^e$ et $R^f$ peut se lier à X.

2. Composition de caoutchouc selon la revendication 1, dans laquelle le composé de soufre organique (B) est un dérivé thiourée possédant un groupe hydroxyle (B-1) représenté par la formule générale (I).

3. Composition de caoutchouc selon la revendication 1, dans laquelle le composé de soufre organique (B) est un composé thioamide (B-2) représenté par la formule générale (II), et la composition contient en outre un agent de couplage au silane (D).

4. Composition de caoutchouc selon la revendication 1 ou 2, dans laquelle dans le dérivé thiourée possédant un groupe hydroxyle (B-1) représenté par la formule générale (I), $R^a$ est un groupe fonctionnel sélectionné parmi un groupe allyle, un groupe allyle substitué par un groupe alkyle et un groupe alcényle possédant un groupe allyle, $R^b$ est un atome d'hydrogène, $R^c$ est un groupe fonctionnel sélectionné parmi un groupe alkyle possédant un groupe hydroxyle, un groupe alcényle possédant un groupe hydroxyle et un groupe aryle possédant un groupe hydroxyle, et $R^d$ est un atome d'hydrogène.

5. Composition de caoutchouc selon la revendication 1, 2 ou 4, qui contient en outre un agent de couplage au silane (D).

6. Composition de caoutchouc selon la revendication 5, dans laquelle la quantité du dérivé thiourée possédant un groupe hydroxyle (B-1) est, sous la forme d'un rapport en masse de {dérivé thiourée possédant un groupe hydroxyle (B-1)/agent de couplage au silane (D)}, de (2/100) à (200/100).

7. Composition de caoutchouc selon la revendication 1 ou 3, dans laquelle le composé thioamide (B-2) est contenu en une quantité de 0,1 à 5 parties en masse pour 100 parties en masse du composant de caoutchouc (A).

8. Composition de caoutchouc selon l'une quelconque des revendications 1 à 7, dans laquelle la charge inorganique (C) est la silice.

9. Procédé de production d'une composition de caoutchouc qui contient un composant de caoutchouc (A), au moins un composé de soufre organique (B) sélectionné parmi un dérivé thiourée possédant un groupe hydroxyle (B-1) représenté par la formule générale suivante (I) et un composé thioamide (B-2) représenté par la formule générale suivante (II), et une charge contenant une charge inorganique (C);
le procédé comprenant au moins un premier stade de malaxage du composant de caoutchouc (A), le composé de soufre organique (B), et tout ou une partie de la charge inorganique (C), et,
après le premier stade de malaxage, un stade de malaxage final d'addition à celui-ci d'un agent de vulcanisation et en outre leur malaxage:

[Chem. 3.

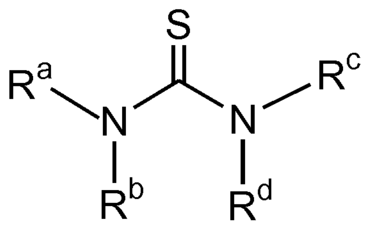

・・・(I)

dans laquelle $R^a$, $R^b$, $R^c$ et $R^d$ peuvent être identiques ou différents, représentant chacun un groupe fonctionnel sélectionné parmi un groupe alkyle, un groupe alkyle possédant un groupe hydroxyle, un groupe alcényle, un groupe alcényle possédant un groupe hydroxyle, un groupe aryle et un groupe aryle possédant un groupe hydroxyle, ou un atome d'hydrogène, et au moins l'un de $R^a$, $R^b$, $R^c$ et $R^d$ est un groupe fonctionnel sélectionné parmi un groupe alkyle possédant un groupe hydroxyle, un groupe alcényle possédant un groupe hydroxyle et un groupe aryle possédant un groupe hydroxyle];

[Chem. 4.

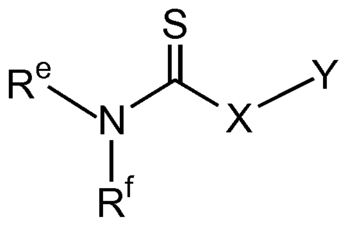

··· (II)

dans laquelle $R^e$ et $R^f$ représentent chacun indépendamment n'importe lequel d'un atome d'hydrogène, d'un groupe hydrocarbure aliphatique ayant de 1 à 10 atomes de carbone, et un groupe hydrocarbure aromatique ayant de 6 à 20 atomes de carbone; X représente n'importe lequel parmi une simple liaison, un groupe hydrocarbure aliphatique ayant de 1 à 10 atomes de carbone, et un groupe hydrocarbure aromatique ayant de 6 à 20 atomes de carbone; Y représente au moins l'un sélectionné parmi un atome d'hydrogène, un groupe alkyle ayant de 1 à 5 atomes de carbone, un groupe hydroxyle, un groupe amino et un atome d'halogène; et au moins l'un de $R^e$ et $R^f$ peut se lier à X.

**10.** Procédé de production d'une composition de caoutchouc selon la revendication 9, dans lequel dans le dérivé thiourée possédant un groupe hydroxyle (B-1) représenté par la formule générale (I), $R^a$ est un groupe fonctionnel sélectionné parmi un groupe allyle, un groupe allyle substitué par un groupe alkyle et un groupe alcényle possédant un groupe allyle, $R^b$ est un atome d'hydrogène, $R^c$ est un groupe fonctionnel sélectionné parmi un groupe alkyle possédant un groupe hydroxyle, un groupe alcényle possédant un groupe hydroxyle et un groupe aryle possédant un groupe hydroxyle, et $R^d$ est un atome d'hydrogène.

**11.** Procédé de production d'une composition de caoutchouc selon la revendication 9 ou 10, dans lequel un agent de couplage au silane (D) est ajouté au premier stade de malaxage.

**12.** Procédé de production d'une composition de caoutchouc selon l'une quelconque des revendications 9 à 11, dans lequel dans le premier stade de malaxage, le composant de caoutchouc (A) et tout ou une partie de la charge inorganique (C) sont malaxés, et ensuite le dérivé thiourée possédant un groupe hydroxyle (B-1) est ajouté à celui-ci et en outre malaxé.

**13.** Procédé de production d'une composition de caoutchouc selon la revendication 9, dans lequel le au moins un composé de soufre organique (B) est un composé thioamide (B-2) représenté par la formule générale (II) et un agent de couplage au silane (D) est également présent; où la composition de caoutchouc est malaxée en plusieurs stades, et au premier stade de malaxage, le composant de caoutchouc (A), tout ou une partie de la charge inorganique (C), tout ou une partie de l'agent de couplage au silane (D).

**14.** Composition de caoutchouc selon l'une quelconque des revendications 3 à 8, dans laquelle l'agent de couplage au silane (D) comprend au moins un composé sélectionné dans le groupe constitué des composés représentés par les formules générales suivantes (V) à (VIII):

[Chem. 9. $(R^1O)_{3-p}(R^2)_pSi\text{-}R^3\text{-}S_a\text{-}R^3\text{-}Si(OR^1)_{3-r}(R^2)_r$ ··· (V)

dans laquelle $R^1$, dont plusieurs groupes peuvent être identiques ou différents l'un de l'autre, représentent chacun un atome d'hydrogène, un groupe alkyle linéaire, cyclique ou ramifié ayant de 1 à 8 atomes de carbone, ou un groupe alcoxyalkyle linéaire ou ramifié ayant de 2 à 8 atomes de carbone; $R^2$, dont plusieurs groupes peuvent être identiques ou différents l'un de l'autre, représentent chacun un groupe alkyle linéaire, cyclique ou ramifié ayant de 1 à 8 atomes de carbone; $R^3$, dont plusieurs groupes peuvent être identiques ou différents l'un de l'autre, représentent chacun un groupe alcylène linéaire ou ramifié ayant de 1 à 8 atomes de carbone; a représente un nombre d'une valeur de 2 à 6 en termes de valeur moyenne et p et r peuvent être identiques ou différents l'un de l'autre et représentent chacun un nombre d'une valeur de 0 à 3 en termes de valeur moyenne, à condition qu'à la fois p et r ne soient pas simultanément 3;

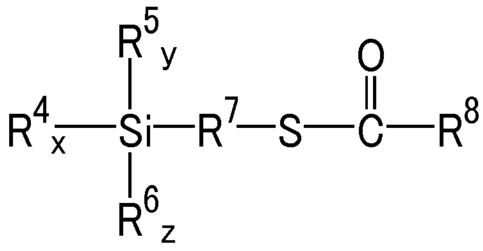

··· (VI)

[Chem. 10.

dans laquelle $R^4$ représente un groupe monovalent sélectionné parmi -Cl, -Br, $R^9O$-, $R^9C(=O)O$-, $R^9R^{10}C=NO$-, $R^9R^{10}CNO$-, $R^9R^{10}N$- et $-(OSiR^9R^{10})_h(OSiR^9R^{10}R^{11})$ (où $R^9$, $R^{10}$ et $R^{11}$ représentent chacun un atome d'hydrogène ou un groupe hydrocarbure monovalent ayant de 1 à 18 atomes de carbone; et h représente un nombre d'une valeur de 1 à 4 en termes de valeur moyenne); $R^5$ représente $R^4$, un atome d'hydrogène ou un groupe hydrocarbure monovalent ayant de 1 à 18 atomes de carbone; $R^6$ représente $R^4$, $R^5$ un atome d'hydrogène ou un groupe représenté par $-(O(R^{12}O)_j)_{0,5}$ (où $R^{12}$ représente un groupe alcylène ayant de 1 à 18 atomes de carbone; et j représente un nombre entier d'une valeur de 1 à 4); $R^7$ représente un groupe hydrocarbure divalent ayant de 1 à 18 atomes de carbone; $R^8$ représente un groupe hydrocarbure monovalent ayant de 1 à 18 atomes de carbone; et x, y et z représentent des nombres qui satisfont les relations, $x + y + 2z = 3$, $0 \leq x \leq 3$, $0 \leq y \leq 2$, et $0 \leq z \leq 1$;

[Chem. 11. $(R^{13}O)_{3-s}(R^{14})_sSi-R^{15}-S_k-R^{16}-S_k-R^{15}-Si(OR^{13})_{3-t}(R^{14})_t$ ... (VII)

dans laquelle $R^{13}$, dont plusieurs groupes peuvent être identiques ou différents l'un de l'autre, représentent chacun un atome d'hydrogène, un groupe alkyle linéaire, cyclique ou ramifié ayant de 1 à 8 atomes de carbone, ou un groupe alcoxyalkyle linéaire ou ramifié ayant de 2 à 8 atomes de carbone; $R^{14}$, dont plusieurs groupes peuvent être identiques ou différents l'un de l'autre, représentent chacun un groupe alkyle linéaire, cyclique ou ramifié ayant de 1 à 8 atomes de carbone; $R^{15}$, dont plusieurs groupes peuvent être identiques ou différents l'un de l'autre, représentent chacun un groupe alcylène linéaire ou ramifié ayant de 1 à 8 atomes de carbone; $R^{16}$ représente un groupe divalent sélectionné parmi $(-S-R^{17}-S-)$, $(-R^{18}-S_{m1}-R^{19}-)$ et $(-R^{20}-S_{m2}-R^{21}-S_{m3}-R^{22}-)$ (où $R^{17}$ à $R^{22}$ représentent chacun un groupe hydrocarbure divalent ayant de 1 à 20 atomes de carbone, un groupe aromatique divalent ou un groupe organique divalent contenant un hétéro-élément autre que le soufre et l'oxygène; et m1, m2 et m3 représentent chacun un nombre d'une valeur de 1 ou plus et inférieur à 4 en termes de valeur moyenne); k, dont plusieurs nombres peuvent être identiques ou différents l'un de l'autre, représentent chacun un nombre d'une valeur de 1 à 6 en termes de valeur moyenne; et s et t représentent chacun un nombre d'une valeur de 0 à 3 en termes de valeur moyenne, à condition qu'à la fois s et t ne soient pas simultanément 3; et

[Chem. 12.

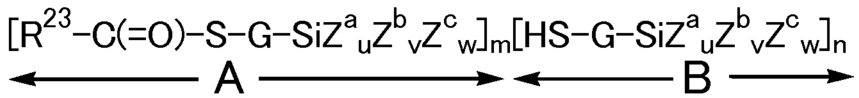

··· (VIII)

dans laquelle $R^{23}$ représente un groupe alkyle linéaire, ramifié ou cyclique ayant de 1 à 20 atomes de carbone; G, dont plusieurs groupes peuvent être identiques ou différents l'un de l'autre, représentent chacun un groupe alcanediyle ou un groupe alcènediyle ayant chacun de 1 à 9 atomes de carbone; $Z^a$, dont plusieurs groupes peuvent être identiques ou différents l'un de l'autre, représentent chacun un groupe qui peut être lié à deux atomes de silicium et représentent un groupe fonctionnel sélectionné parmi $(-O-)_{0,5}$, $(-O-G-)_{0,5}$ et $(-O-G-O-)_{0,5}$; $Z^b$, dont plusieurs groupes peuvent être identiques ou différents l'un de l'autre, représentent chacun un groupe qui peut être lié à deux atomes de silicium et représentent un groupe fonctionnel représenté par $(-O-G-O-)_{0,5}$; $Z^c$, dont plusieurs groupes peuvent être identiques ou différents l'un de l'autre, représentent chacun un groupe fonctionnel sélectionné parmi -Cl, -Br, $-OR^x$, $R^xC(=O)O$-, $k^xR^yC=NO$-, $WR^yN$-, $R^x$- et HO-G-O- (où G est conforme à l'expression ci-dessus mentionnée); $R^x$ et $R^y$ représentent chacun un groupe alkyle linéaire, ramifié ou cyclique ayant de 1 à 20 atomes de carbone; m, n, u, v et w satisfont $1 \leq m \leq 20$, $0 \leq n \leq 20$, $0 \leq u \leq 3$, $0 \leq v \leq 2$, $0 \leq w \leq 1$, et $(u/2) + v + 2w = 2$ où 3; lorsqu'il existe plusieurs fractions représentées par A, $Z^a{}_u$, $Z^b{}_v$ et $Z^c{}_w$ chacune dans les fractions multiples représentées par A peuvent chacune être identiques ou différentes l'une de l'autre; et lorsqu'il existe plusieurs fractions représentées par B, $Z^a{}_u$, $Z^b{}_v$ et $Z^c{}_w$ chacune dans les fractions multiples représentées par B peuvent chacune être identiques ou différentes l'une de l'autre.

**15.** Procédé de production d'une composition de caoutchouc selon l'une quelconque des revendications 11 à 13 dans lequel l'agent de couplage au silane (D) comprend au moins un composé sélectionné dans le groupe constitué des composés représentés par les formules générales suivantes (V) à (VIII):

[Chem. 13. $(R^1O)_{3-p}(R^2)_pSi\text{-}R^3\text{-}S_a\text{-}R^3\text{-}Si(OR^1)_{3-r}(R^2)_r \cdots$ (V)

dans laquelle $R^1$, dont plusieurs groupes peuvent être identiques ou différents l'un de l'autre, représentent chacun un atome d'hydrogène, un groupe alkyle linéaire, cyclique ou ramifié ayant de 1 à 8 atomes de carbone, ou un groupe alcoxyalkyle linéaire ou ramifié ayant de 2 à 8 atomes de carbone; $R^2$, dont plusieurs groupes peuvent être identiques ou différents l'un de l'autre, représentent chacun un groupe alkyle linéaire, cyclique ou ramifié ayant de 1 à 8 atomes de carbone; $R^3$, dont plusieurs groupes peuvent être identiques ou différents l'un de l'autre, représentent chacun un groupe alcylène linéaire ou ramifié ayant de 1 à 8 atomes de carbone; a représente un nombre d'une valeur de 2 à 6 en termes de valeur moyenne et p et r peuvent être identiques ou différents l'un de l'autre et représentent chacun un nombre d'une valeur de 0 à 3 en termes de valeur moyenne, à condition qu'à la fois p et r ne soient pas simultanément 3;

[Chem. 14.

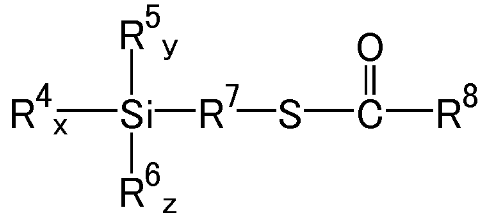

··· (VI)

dans laquelle $R^4$ représente un groupe monovalent sélectionné parmi -Cl, -Br, $R^9O$-, $R^9C(=O)O$-, $R^9R^{10}C{=}NO$-, $R^9R^{10}CNO$-, $R^9R^{10}N$- et $-(OSiR^9R^{10})_h(OSiR^9R^{10}R^{11})$ (où $R^9$, $R^{10}$ et $R^{11}$ représentent chacun un atome d'hydrogène ou un groupe hydrocarbure monovalent ayant de 1 à 18 atomes de carbone; et h représente un nombre d'une valeur de 1 à 4 en termes de valeur moyenne); $R^5$ représente $R^4$, un atome d'hydrogène ou un groupe hydrocarbure monovalent ayant de 1 à 18 atomes de carbone; $R^6$ représente $R^4$, $R^5$ un atome d'hydrogène ou un groupe représenté par $-(O(R^{12}O)_j)_{0,5}$ (où $R^{12}$ représente un groupe alcylène ayant de 1 à 18 atomes de carbone; et j représente un nombre entier d'une valeur de 1 à 4); $R^7$ représente un groupe hydrocarbure divalent ayant de 1 à 18 atomes de carbone; $R^8$ représente un groupe hydrocarbure monovalent ayant de 1 à 18 atomes de carbone; et x, y et z représentent des nombres entiers qui satisfont les relations, $x + y + 2z = 3, 0 \leq x \leq 3, 0 \leq y \leq 2$, et $0 \leq z \leq 1$;

[Chem. 15. $(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \cdots$ (VII)

dans laquelle $R^{13}$, dont plusieurs groupes peuvent être identiques ou différents l'un de l'autre, représentent chacun un atome d'hydrogène, un groupe alkyle linéaire, cyclique ou ramifié ayant de 1 à 8 atomes de carbone, ou un groupe alcoxyalkyle linéaire ou ramifié ayant de 2 à 8 atomes de carbone; $R^{14}$, dont plusieurs groupes peuvent être identiques ou différents l'un de l'autre, représentent chacun un groupe alkyle linéaire, cyclique ou ramifié ayant de 1 à 8 atomes de carbone; $R^{15}$, dont plusieurs groupes peuvent être identiques ou différents l'un de l'autre, représentent chacun un groupe alcylène linéaire ou ramifié ayant de 1 à 8 atomes de carbone; $R^{16}$ représente un groupe divalent sélectionné parmi $(\text{-}S\text{-}R^{17}\text{-}S\text{-})$, $(\text{-}R^{11}\text{-}S_{m1}\text{-}R^{19}\text{-})$ et $(\text{-}R^{20}\text{-}S_{m2}\text{-}R^{21}\text{-}S_{m3}\text{-}R^{22}\text{-})$ (où $R^{17}$ à $R^{22}$ représentent chacun un groupe hydrocarbure divalent ayant de 1 à 20 atomes de carbone, un groupe aromatique divalent ou un groupe organique divalent contenant un hétéro-élément autre que le soufre et l'oxygène; et m1, m2 et m3 représentent chacun un nombre d'une valeur de 1 ou plus et inférieur à 4 en termes de valeur moyenne); k, dont plusieurs nombres peuvent être identiques ou différents l'un de l'autre, représentent chacun un nombre d'une valeur de 1 à 6 en termes de valeur moyenne; et s et t représentent chacun un nombre d'une valeur de 0 à 3 en termes de valeur moyenne, à condition qu'à la fois s et t ne soient pas simultanément 3; et

[Chem. 16.

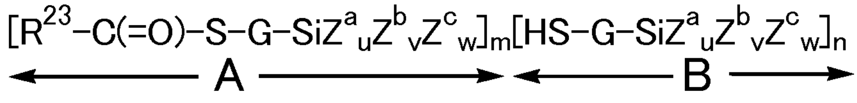

··· (VIII)

dans laquelle $R^{23}$ représente un groupe alkyle linéaire, ramifié ou cyclique ayant de 1 à 20 atomes de carbone; G, dont plusieurs groupes peuvent être identiques ou différents l'un de l'autre, représentent chacun un groupe alcanediyle ou un groupe alcènediyle ayant chacun de 1 à 9 atomes de carbone; $Z^a$, dont plusieurs groupes peuvent être identiques ou différents l'un de l'autre, représentent chacun un groupe qui peut être lié à deux atomes de silicium et représentent un groupe fonctionnel sélectionné parmi $(-O-)_{0,5}$, $(-O-G-)_{0,5}$ et $(-O-G-O-)_{0,5}$; $Z^b$, dont plusieurs groupes peuvent être identiques ou différents l'un de l'autre, représentent chacun un groupe qui peut être lié à deux atomes de silicium et représentent un groupe fonctionnel représenté par $(-O-G-O-)_{0,5}$; $Z^c$, dont plusieurs groupes peuvent être identiques ou différents l'un de l'autre, représentent chacun un groupe fonctionnel sélectionné parmi -Cl, -Br, $-OR^x$, $R^xC(=O)O-$, $R^xR^yC=NO-$, $R^xR^yN-$, $R^x-$ et HO-G-O- (où G est conforme à l'expression ci-dessus mentionnée); $R^x$ et $R^y$ représentent chacun un groupe alkyle linéaire, ramifié ou cyclique ayant de 1 à 20 atomes de carbone; m, n, u, v et w satisfont $1 \leq m \leq 20$, $0 \leq n \leq 20$, $0 \leq u \leq 3$, $0 \leq v \leq 2$, $0 \leq w \leq 1$, et $(u/2) + v + 2w = 2$ où 3; lorsqu'il existe plusieurs fractions représentées par A, $Z^a{}_u$, $Z^b{}_v$ et $Z^c{}_w$ chacune dans les fractions multiple représentées par A peuvent chacune être identiques ou différentes l'une de l'autre; et lorsqu'il existe plusieurs fractions représentées par B, $Z^a{}_u$, $Z^b{}_v$ et $Z^c{}_w$ chacune dans les fractions multiple représentées par B peuvent chacune être identiques ou différentes l'une de l'autre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11130908 A
- JP 2003514079 A
- JP H8259739 A
- JP 2002275311 A
- JP 2004525230 A
- WO 2004000930 A
- JP 2006169538 A
- WO 2007066689 A
- JP S633042 B
- US 3763089 A
- WO 2009066658 A
- US 2003145006 A
- WO 2010000299 A
- JP 2009019098 A
- US 2002143095 A
- US 2002147257 A
- US 2002174924 A
- US 2002143084 A
- JP 2006167919 A


### Non-patent literature cited in the description


- **GHATGE N D et al.** *Rubber World,* 01 January 1969, vol. 160 (6